# EUROPEAN PATENT SPECIFICATION

(11) **EP 3 728 335 B1**
(45) Date of publication and mention of the grant of the patent: **06.12.2023**
(21) Application number: 18837040.7
(22) Date of filing: 20.12.2018
(51) Int. Cl.: C08B 30/20, C08L 3/00, C08L 3/12, A23L 29/212

(54) **LOW-COLOR STARCH MATERIALS AND METHODS FOR MAKING AND USING SAME**
GERING GEFÄRBTE STÄRKEMATERIALIEN UND METHODEN ZUR HERSTELLUNG UND VERWENDUNG
MATÉRIAUX D'AMIDON À FAIBLE COULEUR ET LEURS PROCÉDÉS DE FABRICATION ET D'UTILISATION

(30) Priority: 21.12.2017 US 201762609323 P
(43) Date of publication of application: 28.10.2020
(73) Proprietor: Tate & Lyle Solutions USA LLC, Hoffman Estates, IL 60192 (US)
(72) Inventor: LIU, Weichang, Hoffman Estates, IL 60192 (US); YOU, Zheng, Hoffman Estates, IL 60192 (US); PATTON, Penelope A., Hoffman Estates, IL 60192 (US); COBBY, Michael A., Hoffman Estates, IL 60192 (US); WINDEBANK, Tim, Hoffman Estates, IL 60192 (US); LOCHTMAN, Serge, Hoffman Estates, IL 60192 (US); PEREZ HERRERA, Mariana, Hoffman Estates, IL 60192 (US); SMOOT, James, Hoffman Estates, IL 60192 (US)
(74) Representative: Marks & Clerk LLP
(86) International application number: PCT/US2018/066903
(87) International publication number: WO 2019/126561

(56) References cited:
- WO-A1-2017/185151
- HUI-TIN CHAN ET AL: "Effect of deproteinization on degree of oxidation of ozonated starch", FOOD HYDROCOLLOIDS, ELSEVIER BV, NL, vol. 26, no. 2, 9 March 2011 (2011-03-09), pages 339-343, XP028288955, ISSN: 0268-005X, DOI: 10.1016/J.FOODHYD.2011.03.006 [retrieved on 2011-03-17]
- I Khatijah ET AL: "Physico-chemical properties of local native starches (Ciri fizikokimia kanji asli tempatan)", Agric. and Fd. Sc, 1 January 1998 (1998-01-01), pages 99-104, XP55576302, Retrieved from the Internet: URL:http://ejtafs.mardi.gov.my/jtafs/26-1/ Native%20starches.pdf
- MORANTE NELSON ET AL: "Discovery of new spontaneous sources of amylose-free cassava starch and analysis of their structure and techno-functional properties", FOOD HYDROCOLLOIDS, ELSEVIER BV, NL, vol. 56, 25 December 2015 (2015-12-25), pages 383-395, XP029416144, ISSN: 0268-005X, DOI: 10.1016/J.FOODHYD.2015.12.025

## Description

### Cross-Reference to Related Applications

This application claims the benefit of priority of U.S. Provisional Patent Application no. 62/609323, filed December 21, 2017,

### Background of the Disclosure

### Field of the Disclosure

The present disclosure relates generally to waxy tapioca starch products. More particularly the present disclosure relates to low-color starch materials and methods relating to them, including methods for making and using them.

### Technical Background

Waxy starches are starches that have a high percentage of their starch polysaccharide content in the form of amylopectin, i.e., as opposed to a mixture of amylopectin and amylose as in non-waxy starches. As used herein, a "waxy" starch has at least 90% of its starch content in the form of amylopectin. Waxy starch can provide a number of desirable properties to various foods. For example, waxy starches such as waxy corn starch and waxy tapioca starch can provide desirable texture and thickness to foods, such as bakery fillings (e.g., fruit fillings for pies), batters, breadings, sauces such as cheese sauces and gravies. Waxy starches typically provide a higher viscosity and greater viscosity stability than the corresponding non-waxy starches.

Waxy tapioca starches are extracted from the root of the waxy variety of the cassava plant. Cassava (*Manihot esculenta*) is a woody shrub native to South America and parts of Asia, and is part of the spurge family, *Euphorbiaceae.* It is commonly called cassava, yuca, manioc, "mandioca" and Brazilian arrowroot. Waxy tapioca starch, in native form and in various pregelatinized, inhibited and modified forms, is becoming an increasingly popular additive for foods, due to its combination of good texturizing and thickening qualities with high freeze-thaw and storage stability.

While color does not affect the textural performance of the starch, it is nonetheless an important attribute in the marketplace. Consumers prefer starch materials that add no color to the food to which it is added. Typically, non-waxy tapioca starches are sold as powders with white or pale coloring. These non-waxy tapioca starches are acceptable to consumers because they do not add substantial color to foods to which they are added.

### Summary of the Disclosure

The present invention provides a method for preventing color formation in a waxy tapioca starch, the method comprising
providing a waxy tapioca starch, and
contacting the waxy tapioca starch with an aqueous decolorizing liquid, the aqueous decolorizing liquid being selected from the group consisting of
   an aqueous alkaline liquid, and
   an aqueous surfactant liquid; and
substantially removing the aqueous decolorizing liquid from the waxy tapioca starch, wherein the aqueous decolorizing liquid substantially lacks bleaching or oxidizing compounds; the contacting is performed such that the starch molecules of the starch are not modified; and the contacting with the aqueous decolorizing liquid is performed under conditions at which the waxy tapioca starch does not gelatinize or paste.

Another aspect of the disclosure is a low-color waxy tapioca starch as described herein.

Another aspect of the disclosure is a method for making a food product, comprising cooking a waxy tapioca starch as described herein in the presence of water, and providing the cooked starch in combination with one or more other food ingredients.

Another aspect of the disclosure is a food product including a waxy tapioca starch as described herein, in a cooked form.

Another aspect of the disclosure is a dry mix comprising a waxy tapioca starch as described herein, in admixture with one or more additional dry food ingredients.

### Brief Description of the Drawings

Color versions of the photographs described herein are available in the application file of U.S. Provisional Patent Application no. 62/609323.
FIG. 1 is a photograph of a set of starch pastes of various washed and unwashed waxy tapioca starches as described with respect to Example 1.
FIG. 2 is a photograph of a set of filtrates at different pH values as described with respect to Example 2, in which the pH 9.5 filtrate is significantly more darkly brown than the pH 9.0 filtrate and the pH 8.5 filtrate.
FIG. 3 is a photograph of a set of starch pastes of various washed and unwashed waxy tapioca starches as described with respect to Example 2, in which in each series the left-hand sample is darker than the central two samples, which are darker than the right-hands sample.
FIG. 4 is a set of photographs of filtrates at different pH values using different water sources as described with respect to Example 2, in which the pH 9.5 samples are less darkly brown than the pH 10 samples.
FIG. 5 is a photograph of a set of starch pastes of various washed and unwashed waxy tapioca starches as described with respect to Example 2, in which the untreated sample is more darkly brown than the others.
FIG. 6 is a photograph of a set of filtrates at different pH values as described with respect to Example 3, in which Filtrate 1 is more darkly brown than Filtrate 2, which is more darkly brown than Filtrate 3, which is more darkly brown than Filtrate 4.
FIG. 7 is a set of UV-vis spectra of filtrates from various washing procedures as described with respect to Example 3.
FIG. 8 is a photograph of a set of filtrates at different pH values as described with respect to Example 3, in which Filtrate 1 is more darkly brown than Filtrate 2, which is more darkly brown than Filtrate 3.
FIG. 9 is a set of UV-vis spectra of filtrates from various washing procedures as described with respect to Example 3.
FIG. 10 is a photograph of a set of filtrates at different pH values as described with respect to Example 3, in which the unadjusted sample is more darkly brown than the other samples.
FIG. 11 is a set of UV-vis spectra of filtrates from various washing procedures as described with respect to Example 3.
FIG. 12 is a set of photographs of filtrates from washing using Milli-Q^{®} water as the water source as described with respect to Example 3, in which in each series the left-hand sample is nearly colorless, the center sample is slightly brown, and the right-hand sample is more darkly brown than the center sample.
FIG. 13 is a photograph of a set of washed and unwashed starch pastes as described with respect to Example 3, in which the top left-hand sample is more darkly brown than all other samples.
FIG. 14 is a photograph of a set of washed and unwashed starch pastes as described with respect to Example 4, in which the unwashed samples are more darkly brown than all other samples.
FIG. 15 is a photograph of a set of washed and unwashed starch pastes as described with respect to Example 4.
FIG. 16 is a photograph of a set of washed and unwashed starch pastes as described with respect to Example 5.
FIG. 17 is a photograph of a set of washed and unwashed starch pastes as described with respect to Example 6.
FIG. 18 is a photograph of a set of washed and unwashed starch pastes as described with respect to Example 6.
FIG. 19 is a photograph of a set of washed and unwashed starch pastes as described with respect to Example 6.
FIG. 20 is a photograph of a set of washed and unwashed starch pastes as described with respect to Example 6.
FIG. 21 is a photograph of a set of washed and unwashed starch pastes as described with respect to Example 6.
FIG. 22 is a set of photographs of cassava tubers as described with respect to Example 7.
FIG. 23 is a set of photographs of peeled cassava tubers as described with respect to Example 7.
FIG. 24 is a set of photographs of isolated starch materials as described with respect to Example 7.
FIG. 25 is a set of photographs of filtrates as described with respect to Example 7, in which the right-hand sample is brown, and the left-hand and center samples appear colorless.
FIG. 26 is a set of photographs of filtrates as described with respect to Example 7, in which sample 1 is more darkly brown than samples 2 and 3, which are more darkly brown than sample 4.
FIG. 27 is a photograph of a set of starch pastes as described with respect to Example 7, in which the high pH sample is less darkly brown than the other samples.
FIG. 28 is a photograph of a set of starch pastes as described with respect to Example 7, in which the high pH sample is less darkly brown than the other samples.
FIG. 29 is a photograph of a set of starch pastes as described with respect to Example 7, in which the high pH sample is less darkly brown than the other samples.
FIG. 30 is a photograph of a set of starch pastes as described with respect to Example 7, in which the high pH sample is less darkly brown than the other samples.

### Detailed Description

Like the consumer-preferred non-waxy tapioca starch, waxy tapioca starch is typically provided as a white or pale powder. However, the present inventors have noted that waxy tapioca starches, when processed for use in food, can form a cooked aqueous paste that has a darker, tannish or brownish color. While such color does not have a strong impact on the texturizing behavior of the starch, it is significantly disadvantaged with respect to consumer preference.

The present inventors have, through a number of experiments with particular starch washing methodologies, determined that low-color waxy tapioca starches can be provided using the particular methods described herein. The starches of the disclosure can not only be low in color in a powder form, but, critically, can be low in color when cooked into a paste.

The person of ordinary skill in the art will appreciate that various native starches have different relative amounts of the two major components of starch polysaccharides, amylose (a linear, alpha-1,4-linked polyglucoside) and amylopectin (a branched alpha-1,4-linked polyglucoside with alpha-1,6-linked branch points). So-called "waxy" starches have at least 90% amylopectin (i.e., of the total amount of amylose and amylopectin). Typical non-waxy starches have amounts of amylopectin in the range of 70-85%. In certain embodiments, the waxy tapioca starches as otherwise described herein have an amylopectin content in the range of 95-100%. In other embodiments, the waxy tapioca starches as otherwise described herein have an amylopectin content of at least 99%, or at least 99.9%. The high degree of amylopectin provides waxy starches with different properties than non-waxy starches, e.g., improved clarity, less brittle gels, formation of longer and more cohesive pastes, higher resistance to retrogradation.

The person of ordinary skill in the art will be able to distinguish different sources of starch, for example, via microscopy and comparison with standards. The person of ordinary skill in the art can, for example, view the starch materials under a microscope, optionally with dying with iodide, and use the size and the shape of the observed granules to determine the type of starch. As the person of ordinary skill in the art will appreciate, the cooked pastes of different types of starches from different sources can have different textures and rheological properties, and thus can be desirable for use in different food applications. Accordingly, the person of ordinary skill in the art will be able to distinguish waxy tapioca starches from other waxy starches.

Accordingly, one aspect of the disclosure is a method for preventing color formation in a waxy tapioca starch, e.g., color formation in uncooked or color formation in cooked (paste) form. The method includes providing a waxy tapioca starch (e.g., a native waxy tapioca starch) and contacting the waxy tapioca starch with an aqueous decolorizing liquid that is an aqueous alkaline liquid; and substantially removing the aqueous decolorizing liquid from the waxy tapioca starch. The present inventors have determined that washing the waxy tapioca starch with an aqueous alkaline liquid can significantly reduce the color of the starch, especially when it is later cooked (e.g., into a paste). As described above, this can provide material that is highly consumer-preferred, as it can provide for a lower degree of color formation in an eventual food product.

In certain embodiments as otherwise described herein, the aqueous alkaline liquid has a pH in the range of about 7.5 to about 12. For example, in certain such embodiments, the aqueous alkaline liquid has a pH in the range of about 7.5 to about 10.5, or about 7.5 to about 10, or about 7.5 to 9.9, or about 7.5 to about 9.7, or about 8 to about 11, or about 8 to about 10.5, or about 8 to about 10, or about 8 to 9.9, or about 8 to about 9.7, or about 8.5 to about 11, or about 8.5 to about 10.5, or about 8.5 to about 10, or about 8.5 to 9.9, or about 8.5 to about 9.7, or about 9 to about 12, or about 9 to about 11.5, or about 9 to about 11, or about 9 to about 10.5, or about 9 to about 10, or about 9 to 9.9, or about 9 to about 9.7, or about 9.2 to about 11, or about 9.2 to about 10.5, or about 9.2 to about 10, or about 9.2 to 9.9, or about 9.2 to about 9.7. For example, in certain such embodiments, the pH of the aqueous alkaline liquid is in the range of about 9 to about 10, e.g., about 9.2 to about 9.7, or about 9 to 9.9. And in certain such embodiments, the pH of the aqueous alkaline liquid is in the range of about 7.5 to 9.9, for example, about 8 to 9.9, or about 8.5 to 9.9, or about 9 to 9.9, or about 9.2 to 9.9. Based on the disclosure herein, the person of ordinary skill in the art will select a desired pH, in conjunction with other process parameters, to provide a starch with a desirably low color.

In certain such embodiments, washing method as otherwise described herein does not include subjecting the starch to pH values of about 11 or more. For example, in certain embodiments, the washing method as otherwise described herein does not include subjecting the starch to pH values of about 10 or more.

A variety of bases or buffer systems can be used to provide the desired pH to the aqueous alkaline liquid. For example, in certain embodiments as otherwise described herein, the aqueous alkaline liquid includes a carbonate base, such as an alkali metal carbonate, e.g., potassium carbonate or sodium carbonate. In certain embodiments as otherwise described herein, the aqueous alkaline liquid includes a bicarbonate base, such as an alkali metal bicarbonate. In certain embodiments as otherwise described herein, the aqueous alkaline liquid includes a hydroxide base, such as an alkali metal hydroxide, e.g., sodium hydroxide. As appreciated by the person of ordinary skill in the art, hydroxide bases in solution can be formed from, e.g., the corresponding oxide or hydroxide. While buffering is not necessary, in certain embodiments the aqueous alkaline liquid can be buffered.

In certain embodiments as otherwise described herein, the aqueous alkaline liquid is used at a total rate of at least about 1 L per kg of dry waxy tapioca starch (i.e., based on the total amount of aqueous alkaline liquid contacted with the starch, be it in a single washing step, multiple washing steps, or a continuous washing). The person of ordinary skill in the art will understand that the amount of aqueous alkaline liquid desired for use will depend on many factors, including the amount of color reduction necessary, the particular equipment and washing methodology used, and the particular aqueous alkaline liquid used. The person of ordinary skill in the art will, based on the disclosure herein, use an appropriate amount of aqueous alkaline liquid, in conjunction with other process parameters, to provide a desired low-color starch. In certain embodiments as otherwise described herein, the aqueous alkaline liquid is used at a rate of at least about 1.5 L per kg of dry waxy tapioca starch, at least about 2 L per kg of dry waxy tapioca starch, or even at a rate of at least about 3 L per kg of dry waxy tapioca starch. The person of ordinary skill in the art will appreciate that a relatively large amount aqueous surfactant liquid can be used; larger amounts can be more effective in removing color, although there can be a point of diminishing returns with ever-larger volumes. In certain embodiments, the aqueous surfactant liquid is used at a rate up to about 10 L per kg of dry waxy tapioca starch, up to about 20 L per kg of dry waxy tapioca starch, up to about 50 L per kg of dry waxy tapioca starch, or even up to about 100 L per kg of dry waxy tapioca starch. The person of ordinary skill in the art will, based on the disclosure herein, select a rate of liquid use that provides the desired color removal without undue waste.

The person of ordinary skill in the art will appreciate that the contacting of the aqueous alkaline liquid with the waxy tapioca starch can be performed for a variety of times. The contacting time is the total time of contact of an aqueous composition with the starch (regardless of whether it is the full volume of liquid, e.g., in the case of washing a fluid through a bed of starch, the total time is the time from the beginning of the wash to the end of the wash). The person of ordinary skill in the art will understand that the contacting time desired for use will depend on a number of factors, including the amount of color reduction necessary, the particular equipment and washing methodology used, and the particular aqueous alkaline liquid used. The person of ordinary skill in the art will, based on the disclosure herein, use an appropriate contacting time. In certain embodiments as otherwise described herein, the aqueous alkaline liquid is contacted with the waxy tapioca starch for at least 5 minutes. For example, in certain such embodiments, the aqueous alkaline liquid is contacted with the waxy tapioca starch for at least about 10 minutes, e.g., at least about 15 minutes. In certain embodiments as otherwise described herein, the aqueous alkaline liquid is contacted with the waxy tapioca starch for no more than about 72 hours, e.g., no more than about 36 hours or no more than about 24 hours. In certain embodiments as otherwise described herein, the aqueous alkaline liquid is contacted with the waxy tapioca starch for no more than about 120 minutes, e.g., no more than about 60 minutes. Of course, in other embodiments, longer or shorter times can be used.

Another aspect of the disclosure is a method for preventing color formation in a waxy tapioca starch, e.g., color formation in uncooked, or color formation in cooked (paste) form. The method includes providing a waxy tapioca starch (e.g., a native waxy tapioca starch) and contacting the waxy tapioca starch with an aqueous decolorizing liquid that is an aqueous surfactant liquid; and substantially removing the aqueous decolorizing liquid from the waxy tapioca starch. The present inventors have determined that washing the waxy tapioca starch with an aqueous surfactant liquid can significantly reduce the color of the starch, especially when it is later cooked (e.g., into a paste). As described above, this can provide material that is highly consumer-preferred, as it can provide for a lower degree of color formation in an eventual food product.

A variety of surfactants can be used in the aqueous surfactant liquid. In certain embodiments as otherwise described herein, the surfactant of the aqueous surfactant liquid has a Hydrophile-Lipophile Balance (HLB) value of at least about 11. For example, in certain embodiments as otherwise described herein, the surfactant of the aqueous surfactant liquid has an HLB value of at least about 13, e.g., at least about 16, or at least about 20. A variety of particular surfactants can be used. For example, in certain embodiments as otherwise described herein, the surfactant is an anionic surfactant. Examples of anionic surfactants suitable for use in the methods described herein include alkylbenzene sulfonates, alkyl sulfonates, alkyl sulfates, fatty alcohol sulfates, polyoxyethylene fatty alcohol ether sulfates, polyoxyethylene fatty alcohol ether phosphates, starch sodium octenylsuccinate, such as, sodium dodecylbenzenesulfonate; sodium lauryl sulfate, sodium laureth sulfate, and food starch esterified with n-octenyl succinic anhydride treated with beta-amylase. In other embodiments as otherwise described herein, the surfactant is a nonionic surfactant. Examples of nonionic surfactants suitable for use in the methods described herein include poly(ethylene oxide)/poly(propylene oxide)/poly(ethylene oxide) block copolymers, such as those available under the Poloxamer tradename; fatty acid esters of methyl glucoside (e.g., coconut oil ester of methyl glucoside); and polysorbates such as polysorbate 20, polysorbate 40, polysorbate 60, polysorbate 65 and polysorbate 80. In certain especially desirable embodiments, the surfactant is a food-safe surfactant.

The surfactant can be used at a variety of concentrations in the aqueous surfactant liquid. The person of ordinary skill in the art will understand that the concentration of surfactant desired for use in the aqueous surfactant liquid will depend on a number of factors, including the amount of color reduction necessary, the particular equipment and washing methodology used, the amount of aqueous surfactant liquid used, and the contacting time. In certain embodiments as otherwise described herein, the surfactant is present in the aqueous surfactant liquid in an amount of at least its critical micelle concentration. The critical micelle concentration is, as the person of ordinary skill in the art will appreciate, the lowest concentration at which the surfactant forms micelles in aqueous solution. In certain embodiments as otherwise described herein, the surfactant is present in the aqueous surfactant liquid in an amount in the range of about 0.005 wt% to about 1 wt%. For example, in various such embodiments, the surfactant is present in the aqueous surfactant liquid in an amount in the range of about 0.005 wt% to about 0.5 wt%, or about 0.005 wt% to about 0.2 wt%, or about 0.005 wt% to about 0.1 wt%, or about 0.01 wt% to about 1 wt%, or about 0.01 wt% to about 0.5 wt%, or about 0.01 wt% to about 0.2 wt%, or about 0.01 wt% to about 0.1 wt%, or about 0.02 wt% to about 1 wt%, or about 0.02 wt% to about 0.5 wt%, or about 0.02 wt% to about 0.2 wt%, or about 0.02 wt% to about 0.1 wt%.

In certain embodiments as otherwise described herein, the aqueous surfactant liquid is used at a total rate of at least about 1 L per kg of dry waxy tapioca starch (i.e., the total amount of aqueous surfactant liquid contacted with the starch, be it in a single washing step, multiple washing steps, or a continuous washing). The person of ordinary skill in the art will understand that the amount of aqueous surfactant liquid desired for use will depend on a number of factors, including the amount of color reduction necessary, the particular equipment and washing methodology used, and the particular aqueous surfactant liquid used. The person of ordinary skill in the art will, based on the disclosure herein, use an appropriate amount of aqueous surfactant liquid, in conjunction with other process parameters, to provide a desired low-color starch. In certain embodiments as otherwise described herein, the aqueous surfactant liquid is used at a rate of at least about 1.5 L per kg of dry waxy tapioca starch, at least about 2 L per kg of dry waxy tapioca starch, or even at a rate of at least about 3 L per kg of dry waxy tapioca starch. The person of ordinary skill in the art will appreciate that a relatively large amount aqueous surfactant liquid can be used; larger amounts can be more effective in removing color, although there can be a point of diminishing returns with ever-larger volumes. In certain embodiments, the aqueous surfactant liquid is used at a rate up to about 10 L per kg of dry waxy tapioca starch, up to about 20 L per kg of dry waxy tapioca starch, up to about 50 L per kg of dry waxy tapioca starch, or even up to about 100 L per kg of dry waxy tapioca starch. The person of ordinary skill in the art will, based on the disclosure herein, select a rate of liquid use that provides the desired color removal without undue waste.

The person of ordinary skill in the art will appreciate that the contacting of the aqueous surfactant liquid with the waxy tapioca starch can be performed for a variety of times. The contacting time is the total time of contact of an aqueous composition with the starch (regardless of whether it is the full volume of liquid, e.g., in the case of washing a fluid through a bed of starch, the total time is the time from the beginning of the wash to the end of the wash). The person of ordinary skill in the art will understand that the contacting time desired for use will depend on a number of factors, including the amount of color reduction necessary, the particular equipment and washing methodology used, and the particular aqueous surfactant liquid used. The person of ordinary skill in the art will, based on the disclosure herein, use an appropriate contacting time. In certain embodiments as otherwise described herein, the aqueous surfactant liquid is contacted with the waxy tapioca starch for at least 5 minutes. For example, in certain such embodiments, the aqueous surfactant liquid is contacted with the waxy tapioca starch for at least about 10 minutes, e.g., at least about 15 minutes. In certain embodiments as otherwise described herein, the aqueous surfactant liquid is contacted with the waxy tapioca starch for no more than about 72 hours, e.g., no more than about 36 hours or no more than about 24 hours. In certain embodiments as otherwise described herein, the aqueous surfactant liquid is contacted with the waxy tapioca starch for no more than about 120 minutes, e.g., no more than about 60 minutes. Of course, in other embodiments, longer or shorter times can be used.

In certain embodiments as otherwise described herein, the aqueous decolorizing liquid is an aqueous alkaline liquid that includes a surfactant (i.e., it is at once an aqueous alkaline liquid and an aqueous surfactant liquid). Such an aqueous decolorizing liquid can be as described above in any combination of features related to aqueous alkaline liquids and aqueous surfactant liquids.

As described above, the aqueous decolorizing liquids described herein include water, and at least one of a base and a surfactant. Desirably, the aqueous decolorizing liquids described herein have water as substantially the only solvent. For example, in certain such embodiments, the aqueous decolorizing liquid has less than about 2 wt%, less than about 1 wt%, or even less than about 0.5 wt% of any organic solvents. However, in other embodiments, greater amounts of other solvents can be present, e.g., up to 15 wt% or even up to 20%. If other solvents are present, they are desirably food-safe, e.g., ethanol.

As the person of ordinary skill in the art will appreciate, the aqueous decolorizing liquids can include other components (e.g., salts) as long as they do not detrimentally affect washing performance.

Moreover, in certain embodiments, the contacting can be performed with different aqueous decolorizing liquids, in series. For example, washing with an aqueous alkaline liquid can be followed by washing with an aqueous surfactant liquid, or vice versa.

The present inventors have determined that the use of deionized water as the solvent for the aqueous liquids can provide especially good results in the methods described herein. Accordingly, in certain embodiments as otherwise described herein, the water of the aqueous decolorizing liquid is deionized water (e.g., substantially the only ions present are those from the base and/or surfactant and, when present, the starch). In certain embodiments as otherwise described herein, the aqueous decolorizing liquid is made by a process including providing deionized water, and forming the aqueous decolorizing liquid from the deionized water (e.g., by combining it with a base and/or a surfactant). In certain embodiments, the deionized water has a resistivity of at least about 1 MΩ·cm, e.g., at least about 5 MΩ·cm, or even at least about 10 MΩ·cm. Deionized water can be provided in a variety of manners, e.g., distillation, ion exchange, or reverse osmosis. In certain embodiments, the aqueous decolorizing liquid has less than about 10 ppm, less than about 5 ppm, or even less than about 1 ppm total calcium and magnesium. In certain embodiments, the aqueous decolorizing liquid has less than about 500 ppb, less than about 100 ppb, or even less than about 10 ppb of metals other than alkali metals, calcium and magnesium. In certain embodiments, the aqueous decolorizing liquid has less than about 500 ppb, less than about 100 ppm, or even less than about 10 ppb of metals other than alkali metals.

It is possible for the aqueous decolorizing liquid to include components other than the base or buffer system. However, the aqueous decolorizing liquid substantially lacks compounds that react with the starch molecules themselves to modify the starch material, for example, cationizing agents (i.e., those that add cationic functionality to the starch, such as glycidyltrimethylammonium chloride and 3-chloro-2-hydroxypropyltrimethylammonium chloride, diethylaminoethyl chloride), anionizing agents (i.e., those that add anionic functionality to the starch, e.g., chlorohydroxypropionic acid, succinylating reagents, sodium hexametaphosphate), amylases, proteases, crosslinking agents (i.e., those that react to crosslink the starch, e.g., POCl₃ and other phosphate crosslinking reagents, adipic anhydride); etherifying agents (e.g., propylene oxide, ethylene oxide); and esterifying agents (e.g., acetic anhydride, succinic anhydrides, vinyl acetate). Similarly, the aqueous alkaline liquid lacks bleaching or oxidizing components (e.g., hypochlorites, peroxides, peracids, persulfates, permanganates, chlorites). In certain desirable embodiments, the aqueous decolorizing liquid substantially lacks components that covalently bond with starch. For example, in certain such embodiments, the aqueous decolorizing liquid includes less than about 0.1 wt%, e.g., less than about 0.05 wt% or even less than about 0.01 wt% of such components.

In certain desirable embodiments, the aqueous decolorizing liquid includes no more than about 2 wt% of components other than aqueous solvent, one or more surfactants and one or more bases. For example, in certain embodiments, the aqueous decolorizing liquid includes no more than about 1 wt% of any component other than the aqueous solvent, one or more surfactants and one or more bases, or even no more than about 0.5 wt% of any component other than the aqueous solvent, one or more surfactants and one or more bases.

In certain desirable embodiments, the aqueous decolorizing liquid includes less than about 1 wt% of components that react with starch molecules themselves, e.g., by covalent modification or catalytic activity on the starch molecules. In certain desirable embodiments, the aqueous decolorizing liquid includes less than about 0.5 wt%, or less than about 0.1 wt% of such components, e.g., less than 0.05 wt% or less than about 0.01 wt% of such components.

The contacting is performed such that that the starch molecules themselves are not substantially modified by covalent reaction, for example, by being cationized, anionized, esterified, etherified, crosslinked, or otherwise modified. In desirable embodiments the degree of such modification is less than about 0.05 wt%, e.g., less than about 0.01 wt%, or even less than about 0.005 wt%.

In certain desirable embodiments, the contacting is performed such that the starch molecules are not substantially hydrolyzed. For example, in certain embodiments, the contacting is performed such that the weight-average molecular weight of the starch as measured by gel permeation chromatography does not change by more than about 5%, e.g., by no more than about 2%, or no more than about 1%.

The contacting of the waxy tapioca starch can be performed at a variety of temperatures. The person of ordinary skill in the art will understand that the temperature desired for use will depend on a number of factors, including the amount of color reduction necessary, the particular equipment and washing methodology used, the particular aqueous decolorizing liquid used, and the contacting time. And, while heating can generally improve efficiency, the person of ordinary skill in the art will appreciate that if the temperature is too high, the starch may paste, which can interfere with the washing process by causing the starch to retain the aqueous decolorizing liquid. The person of ordinary skill in the art will, based on the disclosure herein, use an appropriate contacting temperature. The contacting is performed under conditions at which the starch does not gelatinize or paste. In certain embodiments as otherwise described herein, the contacting is performed at a temperature in the range of about 15 °C to about 70 °C, for example, in the range of about 15 °C to 65 °C, or in the range of about 15 °C to about 60 °C, or in the range of about 15 °C to about 55 °C, or in the range of about 15 °C to about 50 °C, or in the range of about 15 °C to about 45 °C, or in the range of about 15 °C to about 40 °C, or in the range of about 20 °C to about 70 °C, or in the range of about 20 °C to about 65 °C, or in the range of about 20 °C to about 60 °C, or in the range of about 20 °C to about 55 °C, or in the range of about 20 °C to about 50 °C, or in the range of about 20 °C to about 45 °C, or in the range of about 20 °C to about 40 °C, or in the range of about 30 °C to about 70 °C, or in the range of about 30 °C to about 65 °C, or in the range of about 30 °C to about 60 °C, or in the range of about 30 °C to 55 °C, or in the range of about 30 °C to 50 °C. In certain such embodiments, the contacting is performed at a temperature in the range of about 40 °C to about 70 °C, or in the range of about 45 °C to about 70 °C, or in the range of about 50 °C to about 70 °C, or in the range of about in the range of about 40 °C to about 60 °C, or in the range of about in the range of about 45 °C to about 65 °C.

The person of ordinary skill in the art will appreciate that the contacting and removing operations can be performed in a variety of manners. For example, the starch can be contacted by slurrying it in the aqueous decolorizing liquid, then the water can be removed by conventional dewatering techniques, such as filtration, centrifugation, or membrane separation. Hydrocycloning can also be used to dewater the slurry. In other embodiments, liquid is flowed through a bed (e.g., a cake) of starch, contacting the starch and being removed from the starch as it passes through. The person of ordinary skill in the art will select a desirable set of contacting and removing operations based on the disclosure herein.

In certain desirable embodiments, the contacting and removing operations are performed during the starch extraction process, e.g., in the process of forming a solid starch product (e.g., in the form of a powder) from a waxy tapioca tuber. Notably, these methods can be performed without first isolating the starch from the starch milk. For example, in certain embodiments, the method includes providing a starch milk having the waxy tapioca starch (i.e., as small particles) suspended in an aqueous medium; and adding base and/or surfactant to the aqueous medium to provide the waxy tapioca starch in contact with the aqueous decolorizing liquid. The starch milk can be provided using conventional methods. For example, the cassava tuber can be peeled or otherwise treated to remove a majority of the skin, then shredded to form the pulp. In certain such embodiments, at least about 30%, at least about 60%, or even at least about 90% of the skin is removed from the tuber. However, in some cases it can be undesirably process-intensive to exhaustively remove all of the skin from the tuber; accordingly, in certain embodiments, the cassava tuber has at least about 10%, at least about 20%, or even at least about 30% of the skin remaining thereon when it is formed into pulp. The fiber in the pulp can be mechanically separated from the starch with water washing to form the starch milk as a suspension of the waxy tapioca starch in the aqueous medium. The contacting with the base and/or surfactant can be performed in the starch milk, e.g., before the starch is substantially isolated from the starch milk. In another embodiment, the method includes washing the tapioca pulp with the aqueous decolorizing liquid to extract starch therefrom, thereby forming a starch milk comprising the waxy tapioca starch in contact with the aqueous decolorizing liquid. Here, too, the method can be performed before the starch is substantially isolated from the starch milk.

In other embodiments, the contacting and removing operations are performed after the extraction from the tuber, but before the extracted starch is substantially dried. For example, in certain embodiments, the method includes providing a starch milk having the waxy tapioca starch (i.e., as small particles) suspended in an aqueous medium; isolating the starch from the starch milk to provide a wet starch cake (i.e., a moist solid), and, without substantially drying the wet starch cake, contacting the wet starch cake with the aqueous decolorizing liquid. The wet starch cake from the tuber in certain such embodiments does not drop below, e.g., about 25% water, about 35% water, or even about 45% water content.

In certain embodiments, the waxy tapioca starch is provided in the form of a solid; and the solid is contacted with the aqueous decolorizing liquid. The solid can be, for example, a dry powder, or a moist solid (e.g., dewatered but not dried from a prior process step). For example, the contacting can be performed by passing the aqueous decolorizing liquid through a solid bed of the waxy tapioca starch.

In certain such embodiments, after contacting the aqueous decolorizing liquid with the waxy tapioca starch, dewatering the waxy tapioca starch to remove the aqueous decolorizing liquid therefrom. As the person of ordinary skill in the art will appreciate, a variety of dewatering techniques can be used. In other embodiments, the starch is dewatered using filtration, e.g., rotary vacuum filtration, rotary pressure filtration or press filtration. In other alternative embodiments, centrifugation is used to dewater the starch. Notably, the contacting of the starch with the aqueous decolorizing liquid can be performed in the same apparatus as the removing of the aqueous decolorizing liquid therefrom.

Without intending to be bound by theory, the present inventors surmise that the color-causing substances have some affinity for the starch. Continuous dilution of solubles such as in the use of a hydrocyclone will drive the equilibrium towards solubilization of color-causing substances. Combination of hydrocyclone with rotary vacuum filtration or rotary pressure filtration, for example, can allow a continuous process.

The person of ordinary skill in the art will appreciate that various contacting and removing operations can be combined to provide desired washing efficiencies and starch yields.

Notably, the present inventors have determined that the liquid removed from the starch is typically highly colored, demonstrating that it carries away a significant degree of the color-forming components from the starch.

In certain embodiments of the methods as otherwise described herein, the method further includes, after substantially removing the aqueous decolorizing liquid from the starch, rinsing the starch. Rinsing the starch (e.g., with water or another aqueous rinsing liquid) can remove residual base and/or surfactant, and can in many cases further remove solubilized color-forming components. For example, in certain embodiments, the starch is rinsed with at least one volume of an aqueous rinsing liquid (e.g., water), e.g., at least two volumes or even at least four volumes of an aqueous rinsing liquid. Rinsing can be performed with agitation, as will be apparent to the person of ordinary skill in the art. Rinsing, however, is not necessary, and in other embodiments, the starch is rinsed after the aqueous decolorizing liquid is removed from the starch.

In certain embodiments, when the aqueous decolorizing liquid is alkaline, it can be desirable to adjust the pH of the aqueous fluid retained by the starch so that it is no longer alkaline, e.g., at the time of the drying step. For example, in certain embodiments, the pH of the aqueous fluid retained by the starch is no more than about 7.5 at the time of a further processing operation, e.g., at the time of a drying operation. For example, the pH of the aqueous fluid retained by the starch can be in the range of about 4 to about 7.5, for example, about 4 to about 7, or about 4 to about 6.5, or about 4.5 to about 7.5, or about 4.5 to about 7, or about 4.5 to about 6.5, or about 5 to about 7.5, or about 5 to about 7, or about 5.5 to about 7.5. The person of ordinary skill in the art can arrive at this pH in many ways, e.g., by rinsing with water, or by treatment with weak acid or buffer.

In certain embodiments, the starch can be dried after the aqueous decolorizing liquid is removed therefrom. Desirably, the drying is performed at a temperature at which the starch will not react with any residual base and/or surfactant. And, as described above, rinsing or other treatment to reduce the pH from an alkaline treatment can be performed before the drying. For example, in certain embodiments, the drying is performed at a temperature in the range of about 25 °C to about 85 °C, e.g., about 25 °C to about 65 °C, or about 25 °C to about 60 °C, or about 25 °C to about 55 °C, or about 25 °C to about 50 °C, or about 30 °C to about 70 °C, or about 30 °C to about 65 °C, or about 30 °C to about 60 °C, or about 30 °C to about 55 °C, or about 30 °C to about 50 °C, or about 35 °C to about 70 °C, or about 35 °C to about 65 °C, or about 35 °C to about 60 °C, or about 35 °C to about 55 °C, or about 40 °C to about 85 °C, or about 40 °C to about 80 °C, or about 40 °C to about 70 °C, or about 40 °C to about 65 °C, or about 50 °C to about 85 °C, or about 50 °C to about 80 °C.

As the person of ordinary skill in the art will appreciate, the waxy tapioca starch can be further purified, e.g., by using other conventional methods, to reduce undesirable flavors, odors, or colors, e.g., that are native to the starch or are otherwise present. For example, methods such as steam stripping, ion exchange processes, dialysis, filtration, bleaching such as by chlorites, enzyme modification (e.g., to remove proteins), and/or centrifugation can be used to reduce other impurities. The person of ordinary skill in the art will appreciate that such purification operations may be performed at a variety of appropriate points in the process.

Moreover, after the contacting and removing steps described herein, the starch can be further processed, for example, to provide a starch that is one or more of inhibited, modified (chemically, enzymatically, physically, or thermally, or any combination), and pregelatinized.

And in other embodiments, the contacting and removing steps as described herein can be performed on starch that has already been one or more of inhibited, modified and pregelatinized.

Notably, the methods described herein can, in certain especially desirable embodiments, provide a dry waxy tapioca starch having a low color by having a yellow index of no more than about 10. For example, certain embodiments of the methods as described herein can provide a dry tapioca starch having a Yellowness Index in the range of about 3 to about 10 or about 5 to about 10. In certain desirable embodiments, the Yellowness Index is no more than about 8 (e.g., about 3 to about 8 or about 5 to about 8). Yellowness Index is determined via ASTM E313.

And even more notably, the methods described herein can in certain embodiments provide a waxy tapioca starch having a paste color of no more than about 7.

In certain such embodiments, the paste color is no more than about 6, no more than about 5, no more than about 4, no more than about 3.5, or even no more than about 3. As used herein, the paste color is measured on a starch paste at 5% solids in salted buffer (10 g/L NaCl in RVA pH 6.5 buffer (Ricca Chemical Company, no. 6654, 1.00 wt% sodium phosphate dibasic; 0.30 wt% citric acid; 0.20 wt% sodium benzoate; 0.08 wt% methyl p-hydroxybenzoate; 0.02 wt% propyl p-hydroxybenzoate). Starch is dispersed in salted buffer and cooked for 6 minutes with manual stirring at 95 °C, then an additional 20 minutes unstirred at 95 °C. The paste color is measured by filling a 10 mm cuvette about 2/3 full with the paste, then sonicating it in 10 second pulses to remove any entrapped air bubbles in the optical path. Absorbance is measured at 450 nm and 600 nm, and the paste color is calculated using the equation: paste color = [Abs@450 - Abs@600]×100. Such low color is extremely preferred by consumers, because it leads to a lower color contribution of the starch to a food in which it is included. In certain desirable embodiments, the method improves the color of the starch as compared to an unwashed sample by at least about 2 paste color units, e.g., at least about 3 paste color units, at least about 3.5 paste color units, or even at least about 4 paste color units.

The starches described herein can be further processed according to a number of techniques. The person of ordinary skill in the art is familiar with a variety of techniques, such as various inhibition and modification techniques such as esterification, etherification, crosslinking, thermal treatments, thinning, as well as various pregelatinization techniques such as spray cooking, drum drying, and pre-swelling in aqueous alcohol. Moreover, the person of ordinary skill in the art will appreciate that in some cases it can be desirable to perform the washing methods described herein on a starch that has already been modified, pregelatinized or otherwise processed.

Another aspect of the disclosure is a low-color waxy tapioca starch made by a method as described herein.

Another aspect of the disclosure is a low-color waxy tapioca starch, having a Yellowness Index of no more than about 10 in dry form, and/or a paste color of no more than about 4, e.g., no more than about 3.5, or even no more than about 3. The low-color waxy tapioca starch can be as otherwise described herein. In certain desirable embodiments, a low-color waxy tapioca starch is made by a process as described herein.

The starches described herein can be useful in a variety of food products. Accordingly, another aspect of the disclosure is a method for making a food product. The method includes providing the starch in combination with one or more other food ingredients. The starch can, in some embodiments, be cooked, before or after being combined with the other food ingredients. For example, a starch as described herein can be combined with one or more other food ingredients that include water, and cooking the combination of the starch and the food ingredients. In certain particular embodiments, the method includes pasteurization, retorting, kettle or batch cooking, jet cooking, extrusion, high temperature short time treatment, steam injection or ultra-high temperature processing. The starch can alternatively be cooked separately, and later combined with one or more of the food ingredients.

The starches of the disclosure can be useful in a wide variety of food products. The food product can be, for example, a tomato-based product, a gravy, a sauce such as a white sauce or a cheese sauce, a soup, a pudding, a salad dressing (e.g., pourable or spoonable), a yogurt, a sour cream, a pudding, a custard, a cheese product, a fruit filling or topping, a cream filling or topping, a syrup (e.g., a lite syrup), a beverage (e.g., a dairy-based beverage, a soda, a bubble tea, a punch, a juice, an ade, a coffee drink, a tea drink, a smoothie, a shake, a protein drink, an instant beverage, a formula for infants or toddlers), a glaze, a condiment, a confectionary, a pasta, a frozen food, a cereal, or a soup.

The starches described herein can also be used to modify the properties of solid foods, e.g., baked goods, for example, acting as an anti-stalant to provide a softer product that retains a fresher texture after storage. Accordingly, in other embodiments, the food product is a baked good, e.g., a bread, a pastry, a pie crust, a donut, a cake, a biscuit, a cookie, a cracker, or a muffin. In such embodiments, the cooking can include baking. In some embodiments, the use of the starches described herein in a baked good (i.e., in the dough or batter thereof) can help reduce staling. In other embodiments, the starch can be included in, e.g., a filling inside the baked good.

A variety of other food products can advantageously be made using the starches of the present disclosure. For example, food products in which the starches of the present disclosure are useful include thermally- processed foods, acid foods, dry mixes, refrigerated foods, frozen foods, extruded foods, oven-prepared foods, stove top-cooked foods, microwaveable foods, full-fat or fat- reduced foods, and foods having a low water activity. Food products in which the starches of the present disclosure are particularly useful are foods requiring a thermal processing step such as pasteurization, retorting, high-temperature short-time treatment, or ultra high temperature (UHT) processing. The starches of the present disclosure are particularly useful in food applications where stability is required through all processing temperatures including cooling, freezing and heating.

Based on processed food formulations, the practitioner may readily select the amount and type of the starches of the present disclosure required to provide the necessary thickness and gelling viscosity in the finished food product, as well as the desired texture. Typically, the starch is used in an amount of about 0.1 to about 35%, e.g., about 0.5 to about 6.0%, by weight, of the food product. But in other embodiments, more or less of the starch can be used.

Among the food products which may be improved by the use of the starches of the present disclosure are high acid foods (pH <3.7) such as fruit-based pie fillings, and the like; acid foods (pH 3.7-4.5) such as tomato-based products and certain baby foods; low acid foods (pH >4.5) such as gravies, sauces, and soups; stove top- cooked foods such as sauces, gravies, and puddings; instant foods such as puddings; pourable and spoonable salad dressings; refrigerated foods such as dairy or imitation dairy products (e.g., yogurt, sour cream, and cheese); frozen foods such as frozen desserts and dinners; microwaveable foods such as frozen dinners; liquid products such as diet products and hospital foods; dry mixes for preparing baked goods, gravies, sauces, puddings, baby foods, hot cereals, and the like; and dry mixes for predusting foods prior to batter cooking and frying.

In other embodiments, the food product is a confection.

The starches described herein can be used in a wide variety of other foods. For example, in certain embodiments of the starches and methods of the disclosure, the starch is used in a food selected from baked foods, breakfast cereal, anhydrous coatings (e.g., ice cream compound coating, chocolate), dairy products, confections, jams and jellies, beverages, fillings, extruded and sheeted snacks, gelatin desserts, snack bars, cheese and cheese sauces, edible and water-soluble films, soups, syrups, sauces, dressings, creamers, icings, frostings, glazes, tortillas, meat and fish, dried fruit, infant and toddler food, and batters and breadings. The starches described herein can also be used in various medical foods. The starches described herein can also be used in pet foods.

The starches of the present disclosure may also be used in various non-food end use applications where starches (e.g., native, crosslinked, acid thinned, dextrinized, and/or modified) have conventionally been utilized, such as cosmetic and personal care products, paper, packaging, pharmaceutical formulations, adhesives, and the like. For example, the starches described herein can be used as a carrier, binder, or other excipient in pharmaceutical and nutraceutical dosage forms such as tablets, capsules, granular materials and powdery materials.

Another aspect of the disclosure is a dry mix comprising a starch as described herein, in admixture with one or more food ingredients. The starch as described herein can be, for example, a pregelatinized starch. Such a pregelatinized starch can be prepared, for example, by pregelatinizing a starch that has been decolorized as described herein. The dry mix can be, for example, a dry mix for a baked good, e.g., a bread, a pastry, a pie crust, a donut, a cake, a biscuit, a cookie, a cracker, or a muffin.

Further description is provided with respect to the Examples, below.

### Example 1

Brownish color has been observed for certain batches of waxy tapioca starch when cooked in a medium with pH 6.5 or higher. This study demonstrates that waxy tapioca starches washed with sodium hydroxide at high pH can have significantly reduced color.

### Experimental Methods

Starches were washed at 50 °C using the following procedure:
1. Made 1% NaOH solution in reverse osmosis (RO) water (1 g NaOH added to 99 g of RO water)
2. Warmed up about 3 kg RO water in beakers in a 95 °C water bath to 50 °C, and then kept at the 50 °C water bath.
3. Weighed 141.0 g (125 g dry solids) waxy tapioca starch into 3 separate beakers
4. Added 292 g warm RO water to a separate beaker with an overhead stirrer. Added the pre-weighed starch to the beaker. The initial pH was 4.83 and was adjusted to 9.5 with 1% NaOH. 12.4 g of 1% NaOH was used.
5. The slurry was filtered immediately through a Buchner funnel and the cake was washed with 4 volumes of warm RO water (~ 500g). This was the 5min-washed sample.
6. Repeated step 4 in a separate beaker.
7. Continued the stirring for 1h at 50 °C. Filtered the slurry through a Buchner's funnel and washed the cake with 4 volumes of warm RO water. This was the 1 h-washed sample.
8. Repeated step 4 in a separate beaker.
9. Continued the stirring for 2h at 50 °C. Filtered the slurry through a Buchner's funnel and washed the cake with 4 volumes of warm RO water. This was the 2h-washed sample
10. Reslurried the cake in 125 g RO water and the pH of the slurry was 10.08. Adjusted pH to 6.8 with 2M HCl. About 850 microliters HCl was used.
11. The cakes were crumbled on a piece of brown paper over a pan and dried at 50 °C overnight
12. The moisture content of each sample was measured on a Computrac^{®} moisture analyzer.

Starch was washed at room temperature using the following procedure:
1. Weighed 141.0 g (moisture content = 11.36%, dry solids = 125 g) waxy tapioca starch into a beaker.
2. Added RO water to beaker to a total weight of 355 g, and adjusted pH to 9.5 with 1% NaOH.
3. Stirred the slurries on magnetic stir plates for 1h.
4. Filtered the slurry in a Buchner funnel; before the cake dried out, added 250 g RO water. to the top of the starch cake and filter; repeated washing with additional 250 g RO water.
5. The cake was crumbled on a piece of brown paper over a pan and dried at 50 °C overnight.
6. The moisture content of each sample was measured on a Computrac^{®} moisture analyzer.

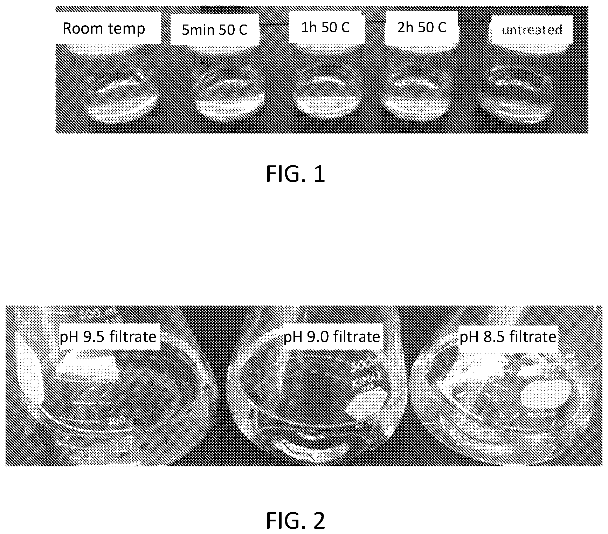

Starch pastes were formed by cooking washed starch samples in 0.1M sodium phosphate buffer at pH 7.5 at 95 °C for 6 min with manual stirring and additional 20 min without stirring. The color of the paste was compared to the unwashed (untreated) waxy tapioca starch and a sample that was stirred at pH 9.5 for 1h at room temperature. As shown in FIG. 1, all three samples at treated at 50 °C (5 min, 1h, 2h) have lighter color than the unwashed starch and the room-temperature treated starch. Washing with at room temperature improves color, but not as much as washing at elevated temperature. All four washed samples show lighter color than the untreated. There was no significant difference between the colors of the samples soaked for different times at 50 °C. However, when the powder color was measured on the Hunter Lab ColorflexD25 reflectometer (TN22568 method), the samples exhibited significant color differences, as shown in Table 1 below:

| **Sample** | **YI** |
|---|---|
| 5 min 50 °C washed | 4.62 |
| 1 h 50 °C washed | 5.7 |
| 2 h 50 °C washed | 7.61 |
| room temp 1h | 7.21 |
| untreated | 4.98 |

### Example 2

The experimental procedure is described below:
Made 1% NaOH solution in tap water (1 g NaOH was added to 99 g of tap water).

Weighed 56.4 g (mc = 11.36%, dry solids = 50 g) waxy tapioca starch into 6 separate beakers.

Added tap water to each beaker to total weight of 166.7 g, and adjust pH to 7.0, 7.5, 8.0, 8.5, 9 and 9.5 with 1 % NaOH for beaker 1, beaker 2, beaker 3, beaker 4, beaker 5 and beaker 6 respectively.

Stirred the slurries on magnetic stir plates for 1h.

Filtered each slurry through a Buchner funnel.

Before the filter cake cracked, 100 g tap water was added to the top of starch cake and filtration continued.

The moisture content of wet cakes was measured using a Computrac^{®} moisture analyzer.

Washed starch was slurried in 0.1M sodium phosphate buffer at pH 7.5 at 5% dry solids (ds). Each sample was cooked for 6 min with manual stirring at 95 °C followed by additional 20 min static at 95 °C. The colors of cooked pastes were compared.

The rest of the washed starch cake was dried at 50 °C overnight.

Procedure -Comparing tap water and RO water at pH 9.5 and 10.0.

30% waxy tapioca starch slurry was prepared in either RO water or tap water (56.4 g starch with moisture content of 11.36% was mixed with either RO water or tap water to the final weight of 166.7 g). The pH of the slurries was adjusted to pH 9.5 and 10 with 1% NaOH. About 3.6 mL of the NaOH solution was added to the slurry to reach pH 9.5, and 5.2 mL was used to reach pH 10.0. The slurries were stirred at room temperature for 1h before filtration. The starch cake from the RO water slurry was further washed with 100 g RO water (2X) and the one from tap water slurry was washed with 100g tap water. The washed starch cakes were crumbled onto a paper-lined pan and dried at 50 °C overnight.

The dried starch was cooked in 0.1M sodium phosphate buffer at pH 7.5 at 5% dry solids (ds). Each sample was cooked for 6 min with manual stirring at 95 °C followed by additional 20 min static at 95 °C. The color of cooked pastes were compared.

FIG. 2 is a picture of filtrates from the experiments. The color of the filtrate increases with the pH of starch slurry. The filtrate from pH 9.5 shows the darkest color, followed by pH 9.0 and pH 8.5. The filtrate from pH 7.0, 7.5 and 8.0 appeared almost colorless (photo not shown).

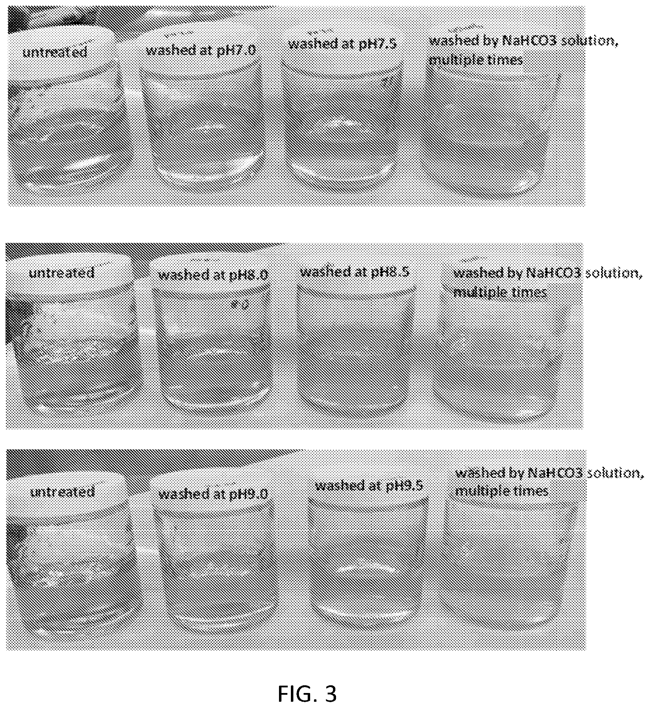

The washed starch was cooked in 0.1 M sodium phosphate buffer at pH 7.5 as described above and the picture of each cooked paste is shown in FIG. 3. The sample that was washed with NaOH solution at pH 9.5 has the lightest color when compared with samples washed with NaOH solution at lower pHs. A sample washed with NaHCO₃ in Milli-Q^{®} water multiple times (see Example 4, cooked NaHCO₃ washed starch) is included in the picture as a reference, which shows lighter color than any of the NaOH solution singly-washed samples. The inventors surmise that differences in washing efficiency result chiefly from differences in pH and effective washing volume, and not, for example, from the use of different sodium cation bases to achieve a given pH.

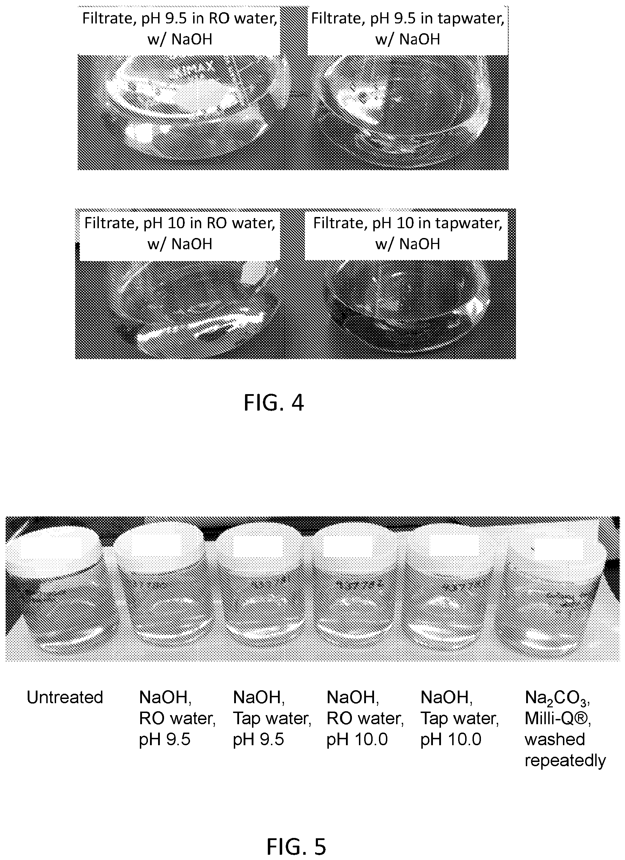

The filtrates from the slurries in RO water and tap water at pH 9.5 and 10.0 are compared in FIG. 4. The color difference between RO water and tap water was not significant at the same pH, but the color was significantly more intense at pH 10.0.

Cooked paste of RO water-washed and tap water-washed waxy tapioca starch samples are shown in FIG. 5, in which the samples from left to right are untreated, unwashed waxy tapioca starch; NaOH in RO water washed at pH 9.5; NaOH in tap water washed at pH 9.5; NaOH in RO water washed at pH 10.0; NaOH in tap water washed at pH 10.0; Na₂CO₃ in Milli-Q water washed repeatedly (see Example 4, cooked Na₂CO₃ washed starch). The RO water washed paste at both pH 9.5 and 10.0 appear slightly less yellow than the tap water washed samples at the same pH. They all appear darker than the sample washed repeatedly with Na₂CO₃ in Milli-Q^{®} water. There does not appear to be significant difference in the paste color for samples washed at pH 9.5 and 10.0.

Thus, adding caustic (NaOH) in the waxy tapioca slurry was able to extract color-forming components from the starch into the water phase, but the efficiency is pH-dependent. Conditions at pH 9.5 and 10.0 worked much better than that at lower pHs, and there was not much difference between pH 9.5 and 10.0 based on the color of the cooked paste. However, all of the singly-washed NaOH solution washed samples, including the two samples washed in RO water, show darker color than samples washed repeatedly with NaHCO₃ and Na₂CO₃ solutions. This suggested that besides water quality, the amount of aqueous decolorizing composition used is also critical in removing the color components.

### Example 3

The experimental procedure is described below:

### Washing waxy tapioca starch with alkaline solution

50 g waxy tapioca starch was weighed into each of two beakers.

Milli-Q^{®} water was added to each beaker to reach total slurry weight of 200 g in each beaker, to provide sample 1 and sample 2.

200 microliters saturated Na₂CO₃ solution was added to each beaker to provide a slurry pH of 9.2.

The slurries were stirred at room temperature for 2h. It was observed that both slurries were slightly tannish in color after 2h.

Both slurries were filtered through the Buchner funnel. Two filtrates were collected, Sample 1-filtrate 1 and Sample 2-filtrate 1.

The cake from sample 1 was re-slurried into 200 g Milli-Q^{®} water, and 100 microliters Na₂CO₃ was added to provide a pH of 9.2. The slurry was stirred briefly with a spatula and filtered. The filtrate was collected: Sample1 - filtrate 2. The starch cake was reslurried into 200 g Milli-Q^{®} water, filtered and the filtrate was collected to provide Sample 1-filtrate 3. The starch cake was again re-slurried into 200 g Milli-Q^{®} water, filtered and the filtrate was collected to provide Sample 1-filtrate 4.

The starch cake from sample 2 was re-slurried in 200 g Milli-Q^{®} water, filtered and the filtrate was collected: Sample 2-filtrate 2. The starch cake was again reslurried in 200 g Milli-Q water, and pH was adjusted to pH 6.0 with 5% HCl. The acidified slurry was filtered and the filtrate was collected: Sample 2-filtrate 3.

The pH of all the filtrates collected was measured.

Photos of all the filtrates collected were taken to compare color.

UV-vis spectra were taken for all the filtrates on the Shimadzu UV-vis 1800 Spectrophotometer in the scan mode from 200nm to 800 nm.

Sample 1-Filtrate 1 was divided to three portions, and two of them were adjusted to pH 5.23 and pH 2.83 with 5% HCl, and photos and UV-vis spectra were recorded.

The washed starch cakes were dried in the 50 °C oven overnight, and moisture content was measured on Computrac^{®} moisture analyzer.

### Washing waxy tapioca starch with Milli-Q^{®} water

50 g waxy tapioca starch was weighed into a beaker

Milli-Q^{®} water was added to the beaker to reach total slurry weight of 200 g, to provide Sample 3)

The slurry was stirred at room temperature for 2 h, and filtered through a Buchner funnel. The filtrate was collected: Sample 3-Filtrate 1.

The starch cake was re-slurried in 200 g Milli-Q water, and stirred briefly with spatula and filtered. The filtrate was discarded. The cake was re-slurried in 200 g Milli-Q water again, and filtered. The filtrate was discarded.

The moisture of the starch cake was measured using a Computrac^{®} moisture analyzer.

Samples created in the process are listed in the table below.

| **Description** | **Comments** |
|---|---|
| sample 1-alkaline washed waxy tapioca starch | Essentially washed by alkaline solution 4 times |
| sample 2-alkaline washed waxy tapioca starch, pH adjusted to 6.0 in final slurry | Essentially washed by alkaline solution 2 times plus additional wash at pH 6.0 |
| sample 1- filtrate 1 | |
| sample 1- filtrate 2 | |
| sample 1- filtrate 3 | |
| sample 1- filtrate 4 | |
| sample 2- filtrate 1 | |
| sample 2- filtrate 2 | |
| sample 2- filtrate 3 | |
| Sample 3-Milli-Q water washed waxy tapioca starch | Essentially washed by Milli-Q water 3 times |
| Sample 3-filtrate 1 | |
| sample 3-filtrate 1, pH adjusted to 9.1 | |
| sample 1- filtrate 1, pH adjusted to 5.23 | |
| sample 1- filtrate 1, pH adjusted to 2.83 | |

### Cook and Look

The three batches of washed waxy tapioca starch were cooked at 5% solids (ds) in 0.1 M sodium phosphate buffer at pH 7.5. The color was compared visually.

### RESULTS

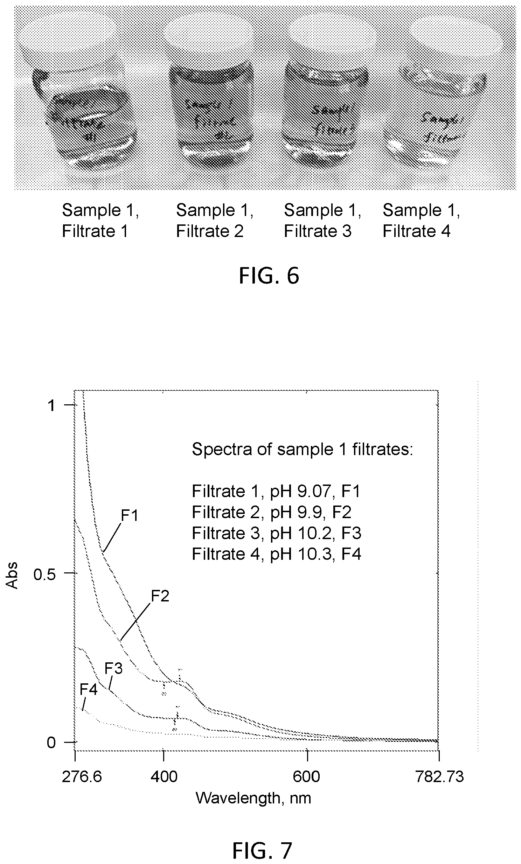

The color of each filtrate from sample 1 was shown in FIG 6, in which from left to right the samples are Sample 1-Filtrate 1, pH 9.1; Sample 1-Filtrate 2, pH 9.9; Sample 1-Filtrate 3, pH 10.2; Sample 1-Filtrate 4, pH 10.3. The amount of color is significantly reduced in the filtrate 3 and filtrate 4.

UV-vis Spectra of filtrates from Sample 1 washing are provided in FIG. 7. The absorption in the region of 270 nm - 600 nm is significantly higher for samples with darker color. The absorption at 425 nm correlates with the intensity of the color in each sample, so it could be used to compare the color in different samples.

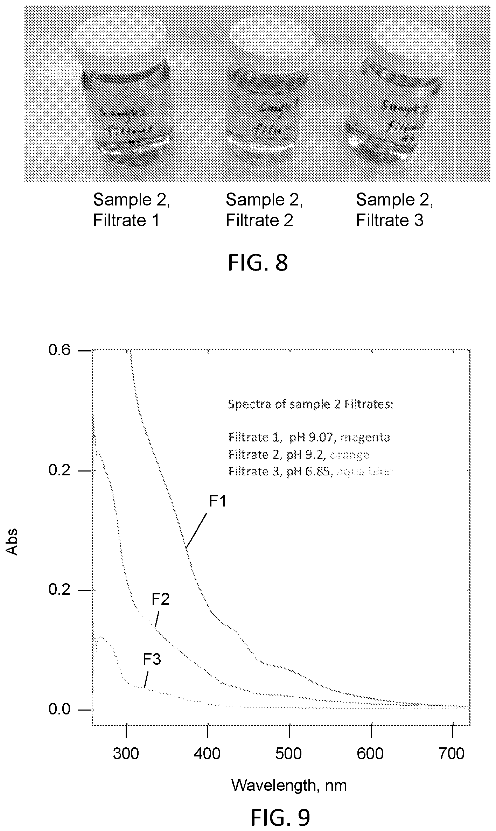

The color of each filtrate from sample 2 is shown in FIG. 8, in which the samples from left to right are: Sample 2-Filtrate 1, pH 9.1; Sample 2-Filtrate 2, pH 9.2; Sample 2-Filtrate 3, pH 6.85. FIG. 9 is a set of UV-vis spectra of the filtrates.

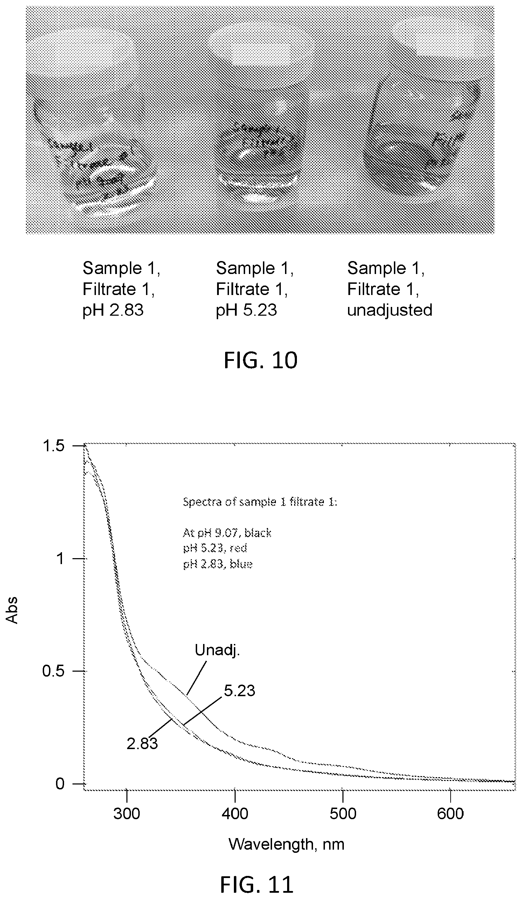

The color of Sample 1-Filtrate 1 at different pH is shown in FIG. 10, in which the samples are, left-to-right, Sample 1-Filtrate 1 adjusted to pH 2.83 (left), pH 5.23 (middle) and unadjusted (right, pH 9.07). The figure shows that when pH is adjusted from original 9.1 to 5.23 and 2.83, the color intensity decreases.

UV-Vis Spectra of Sample 1-Filtrate 1 at these different pH values are provided in FIG. 11. The sample at pH 9.07 exhibits significantly higher absorbance from 320 nm to 600 nm, and the absorbance peak around 425 nm. The absorbance profile for the sample at pH 5.23 and 2.83 is almost identical.

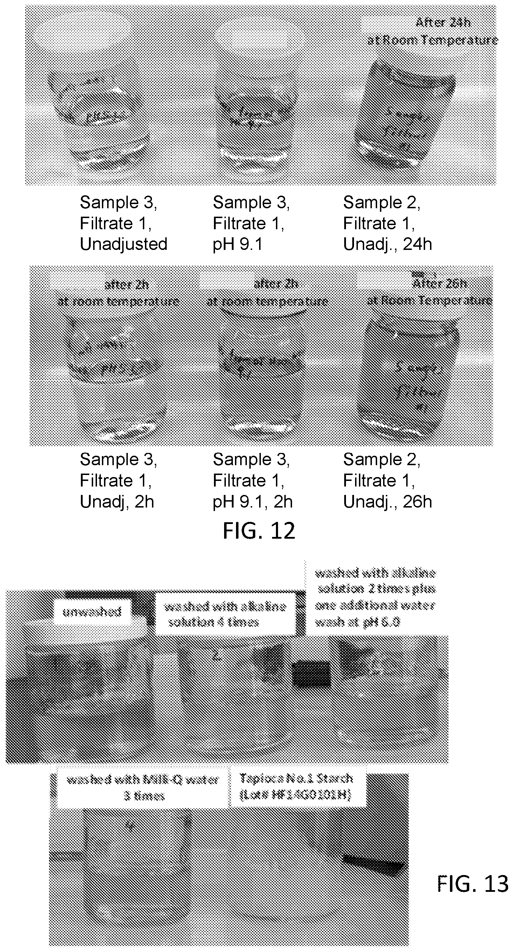

The color of the filtrate from Milli-Q^{®} water wash is shown in FIG. 12, in which the samples are, left-to-right, Top: Sample 3-Filtrate 1, pH unadjusted, pH =5.3; Sample 3-Filtrate 1, pH adjusted to 9.1; Sample 2-Filtrate 1 after 24h at room temperature; Bottom: Sample 3-Filtrate 1, pH unadjusted, pH =5.3 after 2h at room temperature; Sample 3-Filtrate 1, pH adjusted to 9.1, after 2h at room temperature; Sample 2-Filtrate 1 after 26h at room temperature. The filtrate appeared clear and colorless when it was collected (left), with a yellowish color forming upon pH adjustment to 9.1 (middle), which indicates that some of the color-forming components were washed off by water alone, but it did not exhibit color until the pH is raised. The color in the pH 9.1 solution continued building up over time, and it was significantly darker after 2 hours. On the other hand, much less color developed in the acidic solution.

Cooked starch pastes showed different intensities of color, as shown in FIG. 13, in which the samples are cooked waxy tapioca starch before and after washing with different solutions (jar 1-4 from left to right). Regular tapioca starch is also included as reference here (Jar 5). The unwashed waxy tapioca exhibited showed darkest color, and the sample washed with alkaline solution four times exhibited the lightest color.

### Example 4

The experimental methods are described below:

### A. Procedure for washing with NaHCO₃ solution:

1. 50 g waxy tapioca starch was weighed into a beaker.
2. 2.5 g NaHCO₃ was added into the beaker.
3. Milli-Q water was added to a total weight of 200 g. The pH was determined to be 8.1.
4. The slurry was stirred on a stir plate at room temperature for 1h.
5. 1.25% NaHCO₃ was prepared by dissolving 5 g NaHCO₃ in Milli-Q water to final weight of 400 g.
6. The slurry was filtered through a Buchner funnel.
7. The filtrate was collected to provide NaHCOs-Filtrate 1. The pH was 8.49.
8. Vacuum was disconnected while there was still a thin layer of solvent left in the funnel; An additional 200 g of 1.25% NaHCO₃ was added to the top of starch cake and filtered through; Before the cake dried out, 200 g of Milli-Q^{®} water was added to the top of starch cake and filtered through. The combined filtrate provided NaHCOs-Filtrate 2, having a pH of 8.55.
9. 200 g Milli-Q^{®} water was added on top of the starch cake for a final wash and the filtrate was collected to provide NaHCOs-Filtrate 3, having a pH of 8.68.
10. The wet cake was re-slurried into 200 g Milli-Q water and then the pH was adjusted to 6.2 with 5% HCl.
11. The cakes were dried in a 50 °C oven overnight, to provide NaHCO₃ washed starch.

### B. Procedure for washing with Na₂CO₃ solution:

1. 50 g waxy tapioca starch was weighed into a beaker.
2. Milli-Q^{®} water was added to the beaker to a total weight of 200 g.
3. The pH was adjusted with saturated Na₂CO₃; about 220 microliters of Na₂CO₃ was added.
4. The slurry was stirred on a stir plate at room temperature for 1 h.
5. Prepared a dilute Na₂CO₃ solution at pH 9.2 by adding the saturated Na₂CO₃ solution into Milli-Q^{®} water dropwise until the pH reached 9.2.
6. Filtered the slurry through a Buchner funnel.
7. Collected the filtrate to provide Na₂CO₃-Filtrate 1 having a pH of 9.2.
8. Vacuum was disconnected while there was still a thin layer of solvent left in the funnel; 200 g of the pH 9.2 Na₂CO₃ solution was added to the top of starch cake and filtered through. Before the cake dried out, 200 g of Milli-Q water was added on top of the starch cake and filtered through. The combined filtrate provided Na₂CO₃-Filtrate 2 having a pH of 9.67.
9. Added 200 g Milli-Q^{®} water on top of the starch cake for a final wash, collecting the filtrate to provide Na₂CO₃-Filtrate 3 having a pH of 10.3.
10. The wet cake was re-slurried into 200 g Milli-Q^{®} water and the pH was adjusted to 6.6 with 5% HCl.
11. Dry the cakes at 50 °C oven overnight to provide Na₂CO₃ washed starch.

### C. Cook and look

Weighed 5 g of dried starch into 0.1 M phosphate buffer pH 7.5 to provide a final slurry weight of 100 g. The starch slurry was cooked at 95 °C for 6 min with stirring followed by 20 min static, as described above.

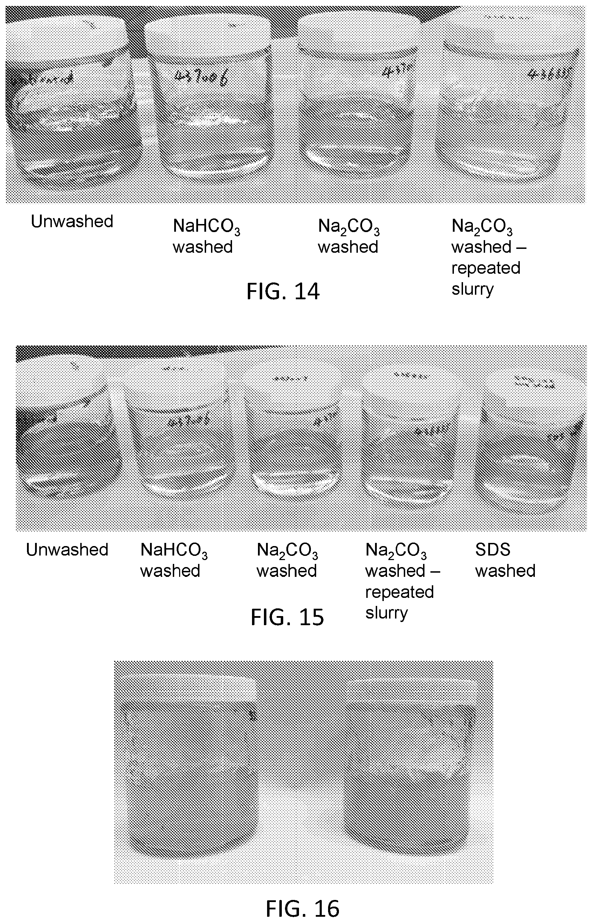

The cooked waxy tapioca starch pastes made with starch with and without washing with alkaline solutions are shown in FIG. 14, in which the samples are, from left to right: Unwashed waxy tapioca starch; NaHCO₃ solution pH 8.1 washed waxy tapioca starch as described above; Na₂CO₃ solution pH 9.2 washed waxy tapioca starch as described above; Na₂CO₃ solution washed waxy tapioca by a repeated slurrying process (See Example 3, sample 1). Starch washed with NaHCO₃ solution at pH 8.1 exhibits similarly light color to that washed with Na₂CO₃ solution at pH 9.2. The sample washed with Na₂CO₃ solution in the funnel as starch cake shows similar color to the one washed with Na₂CO₃ solution through the repeated slurring process.

The alkaline solution-washed starch was also compared with a SDS (sodium dodecyl sulfate) washed starch; in FIG. 15, the left-to-right order is: Unwashed waxy tapioca starch; NaHCO₃ solution washed waxy tapioca starch; Na₂CO₃ solution washed waxy tapioca starch; Na₂CO₃ solution washed waxy tapioca by the repeated slurring process; SDS washed waxy tapioca starch (see Example 5). All of the starch samples were cooked in 0.1 M sodium phosphate buffer at pH 7.5 as described above. The alkaline washed samples appear lighter in color compared to the SDS-washed sample.

The color removal efficiency by sodium carbonate and sodium bicarbonate solutions is similar in the current study, even though the pH was different in the two processes. The cooked paste color appears lighter for the samples washed with NaHCO₃ and Na₂CO₃ solution than for those washed with SDS (sodium dodecyl sulfate). Notably, however, the SDS-washed starch used tap water instead of high quality Milli-Q^{®} deionized water, and the amount of water used was significantly less as well.

### Example 5

This study used sodium dodecyl sulfate (SDS) to wash waxy tapioca starch. Sodium stearoyl lactylate (SSL) was chosen as control because it would not be expected to wash out hydrophobic components as much as SDS would. The concentration was set at 0.45% (w/w) of total washing dispersion.

A solution of sodium dodecyl sulfate in tap water was used to wash waxy tapioca starch. As described below, the filtrate after SDS solution washing was much browner than that provided by SSL solution washing, and also much browner than provided by tap water washing, indicating some color-forming components were removed from the waxy tapioca starch. A lot of foam was formed in the filtration flask of SDS-washing, while small amount of foam was formed the in SSL-washing case.

The SDS-washed waxy tapioca starch paste cooked in salted pH 6.5 buffer solution exhibited very light color, much lighter than either the untreated or tap water-washed waxy tapioca starch paste. The SSL-washed waxy tapioca starch paste was opaque with some brown color. The opacity might be attributed to the residual SSL and its high hydrophobicity and poor solubility in water.

### EXPERIMENTAL METHODS

### Washing waxy tapioca starch with SDS solution or SSL dispersion

Added 0.9 grams of SDS or SSL.

Added tap water (-100 gram) to the beaker. Stirred to dissolve SDS or SSL.

Added 60 grams of waxy tapioca starch into a beaker. Added more tap water to bring total sample to 200 g.

Stirred the slurry with spatula to disperse the starch in water.

Stirred the slurry on a stir plate for 30 mins at ambient temperature. The stirring rate was 300 rpm.

Filtered the slurry, washed with 50ml tap water, and collected the cake.

Dried the cake in forced air oven at 50 °C over the weekend

### Preparation of starch pastes

### Determined moisture of the starch samples by Computrac^{®} moisture analyzer

Added 5 grams (dry solids) starch to a glass jar (250 ml).

Added salted buffer solution (i.e., as described above) to bring total sample to 100 g.

Accurately weighed jar with lid.

Stirred with glass stir rod until the slurry was free of lumps.

Immersed jar in water bath (95 °C) and stirred with glass stir rod for 6 minutes. Scraped paste from glass rod back into sample.

Loosely capped jar and allowed the sample to remain in the water bath an additional 20 minutes.

Removed jar from bath and placed on counter until the sample was cooled down to ambient temperature.

After cooling to ambient temperature, added DI water to bring weight back to original. Stirred with spoon to homogenize sample.

### RESULTS AND DISCUSSION

Sodium stearoyl lactylate (SSL) did not dissolve well in tap water at ambient temperature, due to its hydrophobicity. After filtration, some particles (likely SSL particles) were found on the top of cake. Washing the cake with extra 50 grams tap water did not remove these particles.

Sodium dodecyl sulfate dissolved well in tap water at ambient temperature and generated some foam. After adding starch to the beaker, the foam tended to collapse and decrease. During filtration, foam was formed in the filtration flask. The filtrate was found to be much browner than that provided by SSL washing, and also much browner than that provided by tap water washing.

A picture of starch pastes cooked in salted buffer solution is provided as FIG. 16, with SDS-washed waxy tapioca starch in the left image SSL-washed waxy tapioca starch in the right image. The SSL-washed waxy tapioca starch paste was opaque with some brown color. The opacity might be attributed to the residual SSL, due to its poor solubility in water. The SDS-washed waxy tapioca starch paste was transparent with a very light color.. No difference in viscosity and cohesiveness was found between the SDS-washed waxy tapioca starch and the non-treated waxy tapioca starch.

### Example 6

The ability of the nonionic polysorbate surfactants (commercially available, for example, under the Tween tradename) to decolorize waxy tapioca starch was studied. Compared to the ionic surfactants like SDS (usually easy to obtain in pure form), the ethoxylated nonionic surfactants typically have a distribution not only in the hydrophobic moiety but also in the degree of ethoxylation. This distribution influences the critical micelle concentration (CMC) of the nonionic surfactants. Furthermore, a large difference between CMC values of nonionic surfactants determined by different methods is often observed. A clear break in the surface tension vs. concentration (log C) curve is not typically obtained for nonionic surfactants, mainly because of a broad molecular weight distribution and the presence of impurities. The dye micellization method determines the CMC based on the shift of wavelength maximum due to the presence of micelles. The CMC of polysorbate surfactants measured by dye micellization are normally 1.5-4.0 times of those measured by surface tension. In this study, as polysorbate surfactants are believed to work as a detergent, it is desirable to estimate the concentration at which micelles are formed is needed. Concentrations of polysorbate surfactants at two times of their CMC measured by dye micellization were used. Suggested concentrations are summarized in the table below.

| Surfactant | Molecular weight* (g/mol) | CMC by dye micellization (mM) | CMC reported by Sigma (mg/L) | Suggested concentration*** (mg/L) |
|---|---|---|---|---|
| polysorbate 20 | 1,227 | 0.042 | 60 | 103 |
| polysorbate 40 | 1,277 | 0.024 | 0.027** | 61 |
| polysorbate 60 | 1,312 | 0.022 | 27 | 58 |
| polysorbate 80 | 1,310 | 0.028 | 13-15 | 73 |

| | | | | |
|---|---|---|---|---|
| *: Based on the designated molecular structure. Actually, these surfactants have a distribution of molecular weights. **: Units assumed to be in mM ***: two times CMC as determined by dye micellization. | | | | |

The CMC of soybean lecithin was not identified in the literature, but the CMC of phosphatidylcholine and egg lecithin are at 0.92 and 0.85 mg/g respectively, derived from the surface tension vs. concentration (logC) curve. Based on these data, the concentration of lecithin was suggested at 2 mg/g based on total weight of slurry.

### Experimental

### Washing waxy tapioca starch with surfactant solution

| **System** | **Surfactant (mg)** | **Starch (dry solids, g)** | **Add water to (g)** |
|---|---|---|---|
| Neg Control | 0 | 100 | 286 |
| polysorbate 20 | 29 | 100 | 286 |
| polysorbate 40 | 17 | 100 | 286 |
| polysorbate 60 | 17 | 100 | 286 |
| polysorbate 80 | 21 | 100 | 286 |
| Lecithin | 572 | 100 | 286 |
| SDS | 1,287 | 100 | 286 |

Added weighed amount of surfactants in beaker.

Added Milli-Q^{®} water (-100 grams) to the beaker. Stirred it to dissolve the surfactant.

Added 100 grams (dry solids) of waxy tapioca starch into the beaker. Added more Milli-Q^{®} water to bring total sample to 286 g.

Stirred the slurry with spatula to disperse the starch in water.

Stirred the slurry on a stirring plate @ 300 rpm for 60 mins at ambient temperature.

Filtered the slurry, washed with 100ml Milli-Q^{®} water, and collected the cake and filtrate.

Dried the cake in forced air oven at 50 °C overnight.

### Preparation of starch pastes

Determined moisture of the starch samples by Computrac^{®} moisture analyzer.

Added 5 grams (DS) starch into a glass jar (500 ml).

Added pH 7.5 phosphate buffer solution (to bring total sample to 100 g) to the jar.

Accurately weighed jar with lid.

Stirred with glass stir rod until the slurry is free of lumps.

Immersed jar in water bath (95 °C) and stir with glass stir rod for 6 minutes. Scraped paste from glass rod back into sample.

Loosely capped jar and allowed the sample to remain in the water bath an additional 20 minutes.

Removed jar from bath and place on counter until the sample is cooled down to ambient temperature.

After cooling to ambient temperature, added Milli-Q^{®} water to bring weight back to original. Stirred with spoon to homogenize sample.

### Results and Discussion

The solutions containing polysorbate surfactants or SDS were transparent, while that containing lecithin was translucent. The solutions containing polysorbate surfactants or lecithin produced less foam than those containing SDS. Only the filtrate of SDS-washing system showed brownish color, the others were clear without difference from that of water-washing system (negative control).

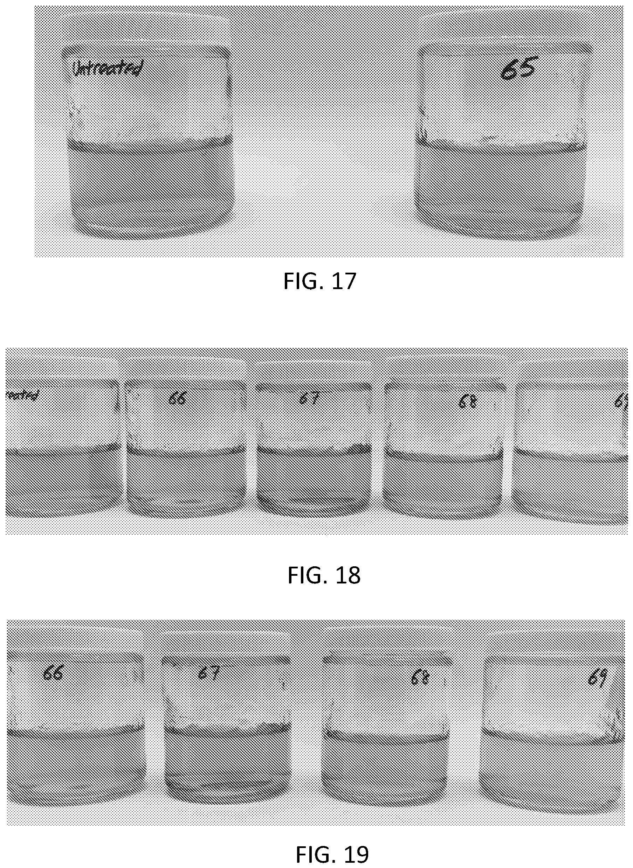

Untreated waxy tapioca starch and seven washed waxy tapioca starches were cooked in pH 7.5 phosphate buffer. Photos of these pastes are shown in FIGS. 17-21, in which:
FIG. 17: from left to right: untreated, negative control
FIG. 18: from left to right: untreated, washed by polysorbate 20, 40, 60 and 80
FIG. 19: from left to right: washed by polysorbate 20, 40, 60 and 80

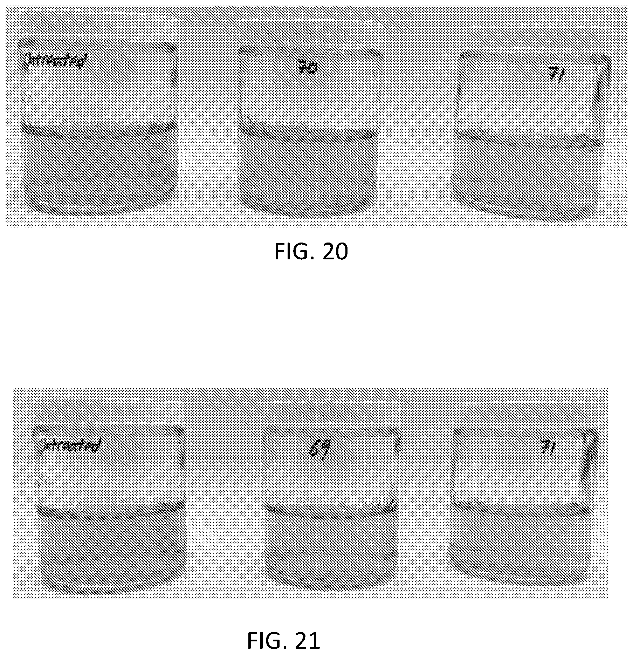

FIG. 20: from left to right: untreated, washed by lecithin, washed by SDS
FIG. 21: from left to right: untreated, washed by polysorbate 80, washed by SDS

In general, all samples exhibited a brownish color after being cooked in pH 7.5 phosphate buffer. Paste prepared from lecithin-washed sample seems to be more translucent than others. However, the data do demonstrate that nonionic surfactant washing can improve the paste color, compared to unwashed and negative control.

### Example 7

Another set of experiments was undertaken to treat waxy tapioca starch with different washing treatments during the starch isolation process, to determine the effect on paste color after further processing and cooking.

In summary:
- The wash filtrates obtained from the water washing (Fraction 2) and low pH washing (Fraction 3) were clear colorless solutions, while the high pH washing filtrate (Fraction 4) was brown in color.
- For all waxy tapioca samples, the paste with the darkest color was from the unwashed treatment, while the lowest color development was from the high pH washing treatment.
- Washing with water and low pH aqueous solution improved the paste color, although there was no substantial difference between these two methods.

### Background

A brown paste color has been observed for some waxy tapioca starch varieties when cooked in a solution of pH 6.5 or higher. This color development has only been observed for waxy tapioca varieties; it has not been reported in non-waxy tapioca starch. Substantial color development is believed to occur primarily during drying and any heat treatment during further starch processing. Therefore, it is desirable to understand whether the color-forming components can be removed from waxy tapioca starch during the starch extraction process in order to avoid drying and re-slurring the starch.

### Materials

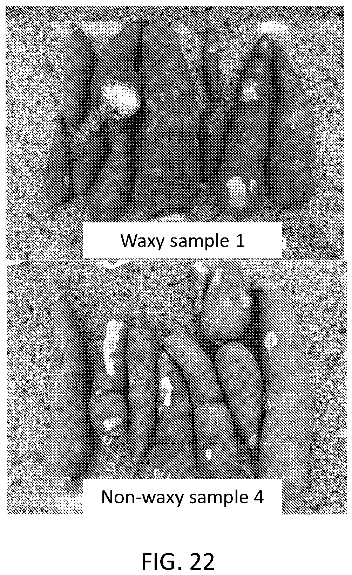

Waxy and non-waxy tapioca roots were obtained; FIG. 22 is a picture of the roots (waxy sample 1 and non-waxy sample 4).. The roots were harvested and the starch extraction began within 24 hours of harvest in order to minimize their post-harvest physiological deterioration.

### Experimental

### A. Starch extraction protocol

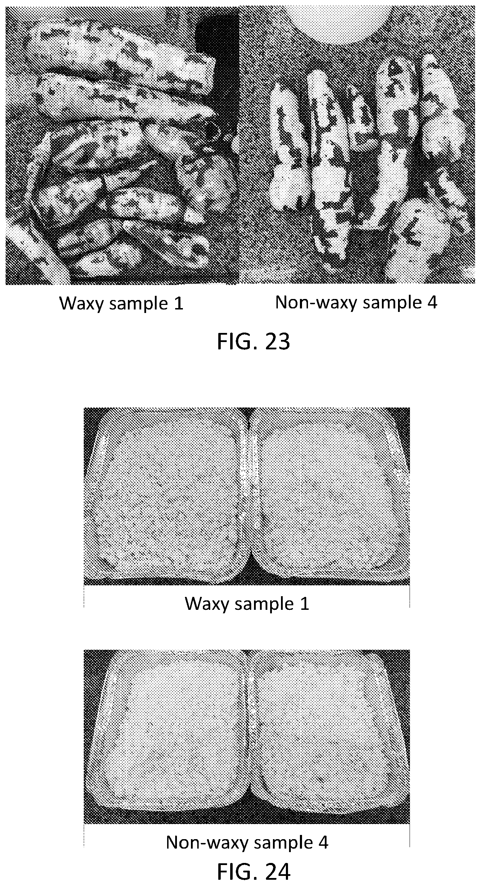

Tapioca starch was isolated from the 3 waxy tapioca roots (waxy sample 1, waxy sample 2, waxy sample 3)) and the non-waxy tapioca root (non-waxy sample 4)) During the starch extraction protocol, -20% of the root peel was left on the root in order to mimic a process in which roots are not exhaustively peeled. FIG. 23 is a picture of the peeled roots (waxy sample 1 and non-waxy sample 4).

The general starch extraction protocol is below:
1. Wash 5 to 6 roots with brush to remove dirt. The roots should represent the roots harvested, that is, all sizes (small, medium and large roots) and preferably who are not damaged and broken
2. Cut the end of one root per clone and spray with a 2% iodine solution to confirm the absence of amylose (i.e., to confirm waxiness).
3. Cut the end of the roots and peel the pieces (cylinders), removing the peel and inner bark. For this particular experiment, intentionally leave -20% of the root peel during cleaning in order to maximize the washing effect by the different treatments (See FIG. 23). Discard the peel and inner bark.
4. Cut into smaller pieces (quarters) to facilitate the step of grinding in a blender.
5. Prepare a starch slurry with a ratio of 1:1 (500 g of minced cassava for 500 mL of cold tap water) and grind in a blender for 90 seconds. Allow to rest for 1 min and blend again for 90 seconds.
6. Place the sieve (150 mesh, pore size 0.105 mm) on top of a plastic bucket and cheesecloth or mesh on top of the sieve. Transfer the blended material to the mesh. Using a mesh retains most of the fiber material which increases the filtration speed through the sieve.
7. Slowly pour water (for 500 gram root, use ~1 liter of water) over the blended material while continuously mixing with a spatula to improve filtration. Squeeze and twist the mesh with your hands to remove as much water and starch as possible.
8. Place the fiber material retained in the mesh back in the blender with water (1:1) and blend for 90 seconds.
9. Transfer the blended material to the mesh again and wash with water.
10. Place the filtered starch slurry in a refrigerator at 5 °C for 12 hours, to allow the starch to settle. This step should be performed in a refrigerator to prevent the fermentation of starch. After 12 hours, decant the supernatant and discard.
11. Add water to re-suspend the starch (1:3 ratio), mix and measure the pH of the starch slurry.
12. Filter the starch slurry and discard the filtrate.
13. Crumble the starch cake

A photograph of the crumbled starch cake of waxy sample 1 and non-waxy sample 4 is provided as FIG. 24.

### B. Starch washing protocols

The starch washing protocols are provided below:
Divide the starch cake obtained from the starch extraction into 5 different portions and continue with the following washing protocols.

### Fraction 1- No washing, starch cake as is after the starch extraction protocol

1. Dry the cakes in forced air oven at 50°C overnight. Label as F1.

### Fraction 2- washing waxy tapioca starch (wet cake) in tap water

1. Keep the waxy tapioca starch cake wet; moisture content assumed to be 50%).
2. Add 100 grams (dry solids basis) of waxy tapioca starch (wet cake) into a beaker.
3. Add tap water to the beaker to a total weight of 340 grams. Mix it well.
4. Stir for 15 min and measure the pH of the starch slurry.
5. Filter the slurry, wash with 200 mL tap water, and collect the cake.
6. Re-disperse the cake in 200 mL tap water, measure pH and record.
7. Keep stirring for 15 mins, filter the slurry out.
8. Dry the cakes in forced air oven at 50 °C overnight. Label as F2.

### Fraction 3- washing waxy tapioca starch (wet cake) at low pH (3.5)

1. Keep the waxy tapioca starch cake wet; moisture content assumed to be 50%).
2. Add 100 grams (dry solids basis) of waxy tapioca starch (wet cake) into a beaker.
3. Add tap water to the beaker to a total weight of 340 grams. Mix it well.
4. Adjust the pH of slurry to 3.5 with 1N HCl and stir for 15 min.
5. Filter the slurry, wash with 200 mL tap water, and collect the cake.
6. Re-disperse the cake in 200 mL tap water, adjust pH with sodium bicarbonate (saturated solution) to pH 6.0 (or the pH of Fraction 1).
7. Keep stirring for 15 mins, filter the slurry out.
8. Dry the cakes in forced air oven at 50°C overnight. Label as F3.

### Fraction 4- washing waxy tapioca starch (wet cake) at high pH (9.5)

1. Keep the waxy tapioca starch cake wet, measure its moisture content (or assume wet cake is 50% moisture).
2. Weigh 100 grams (dry solids basis) of waxy tapioca starch (wet cake) into a beaker.
3. Add tap water to the beaker to a total weight of 340 grams. Mix it well.
4. Adjust the pH of slurry to 9.5 with saturated Na₂CO₃ and 0.1 M NaOH, stir for 15 min.
5. Filter the slurry, wash with 200 mL tap water, and collect the cake.
6. Re-disperse the cake in 200 mL tap water, adjust pH with 1N HCl to pH 6.0 (or the pH of Fraction 1)
7. Keep stirring for 15 mins, filter the slurry out.
8. Dry the cakes in forced air oven at 50 °C overnight. Label as F4.

### C. Paste color by UV-Vis

The waxy tapioca starch is cooked at 5% dry solids in 0.1 M sodium phosphate buffer at pH 7.5 in a 95 °C water bath. 100 g slurry is prepared for each starch sample in a glass jar. The slurry is cooked with manual stirring with a glass rod for 6 min followed by additional 20 min static in the water batch. After the samples are cooled down to room temperature, 1 mL of each paste is carefully transferred to a 10 mm cuvette without introducing any air bubbles. If bubbles are present in the sample, the cuvette is sonicated in 10 second pulses to dissipate any air bubbles in the optical path. Absorbance values at 450 and 600 nm were recorded against the buffer blank. The paste color is defined as 100*(A450-A600).

### Results

### A. Starch extraction protocol

The starch slurry from the starch extraction protocol described above was filtered to obtain starch samples (Waxy 1, waxy 2, waxy 3 and non-waxy 4) before beginning the washing treatments. The starch cakes exhibited no difference in the white color observed between the waxy and non-waxy varieties (See FIG. 24).

### B. Starch washing protocols

The pH of the starch slurry during the different washing treatments was recorded as shown in Table 5. Fractions 1 and 2, no washing and washing with tap water, respectively, had pH close to neutral (pH 7.0). Fraction 3 washed the waxy tapioca starch wet cake at low pH (3.5), while Fraction 4 washed the wet cake at high pH (9.5). After both treatments, the starch wet cake was neutralized to pH 7.0 before drying (see table below).

| | **Fraction 1** | **Fraction 2** | **Fraction 3** | | **Fraction 4** | |
|---|---|---|---|---|---|---|
| **Sample** | | | After HCl | After neutralization | After Na₂CO₃ and NaOH | After neutralization |
| Waxy sample 1 | 6.87 | 7.03 | 3.51 | 7.09 | 9.37 | 7.01 |
| Waxy sample 2 | 6.07 | 7.11 | 3.41 | 7.02 | 9.80 | 6.95 |
| Waxy sample 3 | 6.99 | 7.05 | 3.48 | 7.01 | 9.43 | 7.01 |
| Non-waxy sample 4 | 7.08 | - | 3.52 | 7.02 | 9.45 | 7.09 |

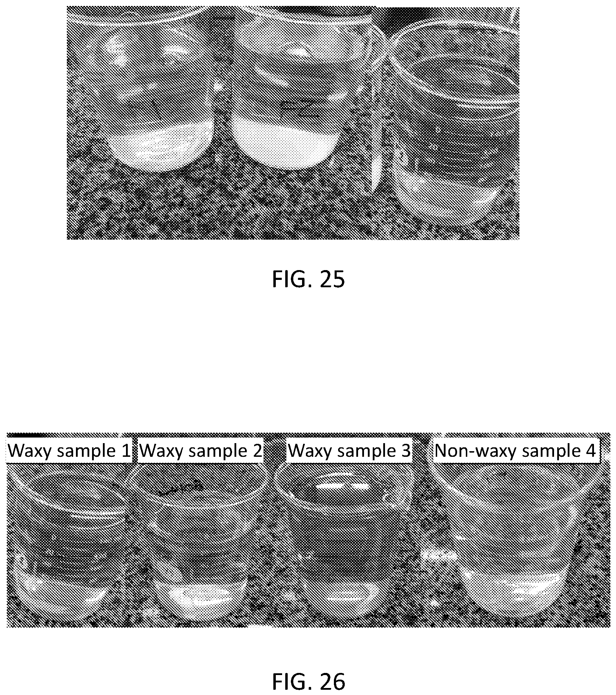

For washing of waxy tapioca starch, the wash filtrates obtained from the water washing Fraction 2 and low pH Fraction 3 were clear, colorless solutions while the high pH washing Fraction 4 was brown in color. FIG. 25 is a photograph of, from left to right, Fraction 2, Fraction 3 and Fraction 4 obtained from waxy sample 1.

The brown color of the wash filtrate obtained after the high pH washing was also different between waxy and non-waxy samples; FIG. 26 is a picture of the Fraction 4 filtrate for all four starch samples. Waxy sample 1 provided a Fraction 4 filtrate that was more yellow/brown, while samples waxy sample 2 and waxy sample 3 provided Fraction 4 filtrates that were more brown in color. The non-waxy sample 4 provided a Fraction 4 filtrate that was almost colorless. This suggests that the color-forming components are more prevalent in waxy than non-waxy tapioca starch samples. During the washing treatments it was also observed that when the pH increases to 9.5, the starch slurry changes color from an off-white to a slight pink-brown color which can be reversed when the pH is neutralized again.

After drying, the waxy tapioca starch from Fraction 1 (no washing) visually appeared to be darker in color than compared to Fraction 2, 3 and 4.

### C. Paste color by UV-Vis

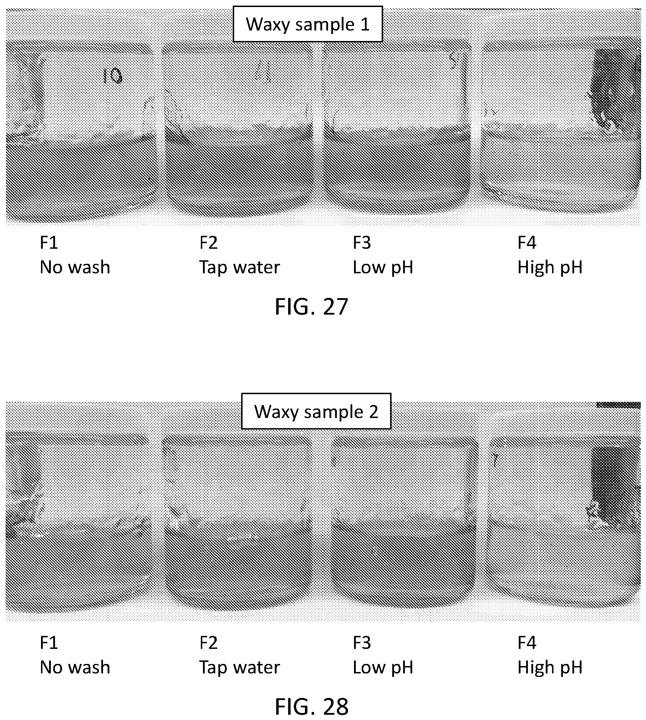

The paste color of washed and unwashed waxy tapioca starch cooked in 0.1 M sodium phosphate buffer at pH 7.5 and 5% solids was evaluated visually (FIG. 27, FIG. 28,

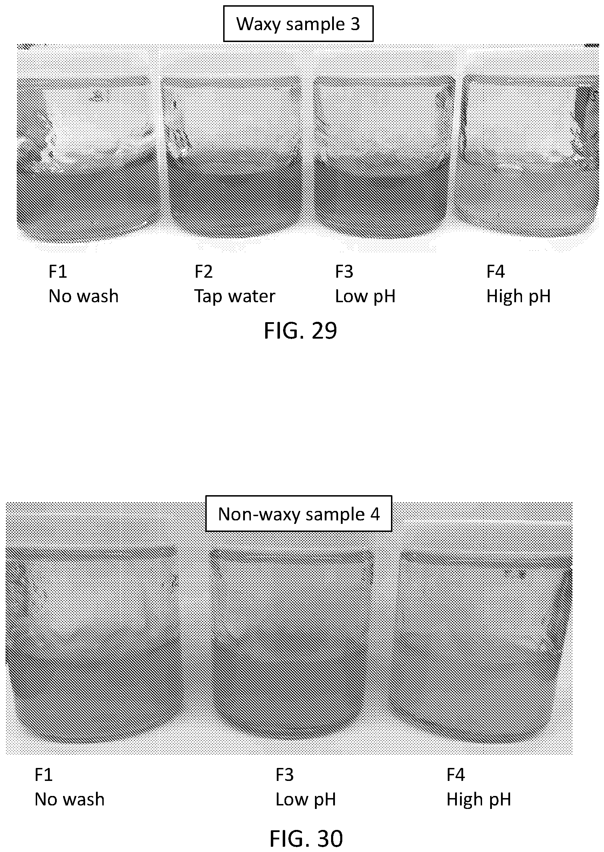

FIG. 29) and by UV-Vis (table below). For all waxy tapioca samples (waxy sample 1, waxy sample 2 and waxy sample 3), the paste with the darkest color was from the unwashed treatment, while the lowest color development was from the high pH washing treatment. Washing with water and low pH improved the paste color from the unwashed treatment, although there was no substantial difference between the two different methods. Within the waxy samples, the cooked paste color was sample-dependent. Waxy sample 2 had a lighter brown paste color than waxy sample 1 and waxy sample 3.

The paste color of non-waxy tapioca starch (non-waxy sample 4) was also evaluated as a reference although the color development is less significant than for waxy tapioca. In comparison with the unwashed treatment, washing with high pH improved the brown color development as shown in FIG. 30.

| | **UV-Vis paste color** | | | |
|---|---|---|---|---|
| **Sample No.** | **Part 1** | **Part 2** | **Part 3** | **Part 4** |
| Waxy sample 1 | 10.2 | 6.8 | 6.4 | 4.4 |
| Waxy sample 2 | 8.5 | 6.0 | 6.1 | 4.1 |
| Waxy sample 3 | 14.7 | 11.9 | 10.7 | 7.6 |

Many numerical values in the present specification are provided preceded by the word "about." For each such value, the present specification also specifically contemplates the value without the modifier "about."

## Claims

1. A method for preventing color formation in a waxy tapioca starch, the method comprising providing a waxy tapioca starch, and
contacting the waxy tapioca starch with an aqueous decolorizing liquid, the aqueous decolorizing liquid being selected from the group consisting of
an aqueous alkaline liquid, and
an aqueous surfactant liquid; and
substantially removing the aqueous decolorizing liquid from the waxy tapioca starch, wherein the aqueous decolorizing liquid substantially lacks bleaching or oxidizing compounds; the contacting is performed such that the starch molecules of the starch are not modified; and the contacting with the aqueous decolorizing liquid is performed under conditions at which the waxy tapioca starch does not gelatinize or paste.

2. The method according to claim 1, wherein the aqueous decolorizing liquid is an alkaline composition.

3. The method according to claim 2, wherein the aqueous alkaline liquid has a pH in the range of 7.5 to 12, for example, in the range of 8 to 9.9.

4. The method according to any of claims 2-4, wherein the aqueous alkaline liquid includes one or more of a carbonate base, a bicarbonate base, and a hydroxide base.

5. The method according to any of claims 1-4, wherein the aqueous decolorizing liquid is an aqueous surfactant liquid that includes a surfactant, such as an anionic surfactant or a nonionic surfactant.

6. The method according to claim 5, wherein the surfactant of the aqueous decolorizing liquid has a Hydrophile-Lipophile Balance (HLB) value of at least 11, for example, at least 13.

7. The method according to any of claims 1-6, wherein the aqueous decolorizing liquid is used at a rate of at least 2 L per kg of dry waxy tapioca starch.

8. The method according to any of claims 1-7, wherein the water of the aqueous decolorizing composition is deionized water having a resistivity of at least 1 MΩ·cm.

9. The method according to any of claims 1-8, wherein the method comprises
a) providing a starch milk comprising the waxy tapioca starch suspended in an aqueous medium; and adding base and/or surfactant to the aqueous medium to provide the waxy tapioca starch in contact with the aqueous decolorizing liquid; or
b) washing tapioca pulp with the aqueous decolorizing liquid to extract starch therefrom, thereby forming a starch milk comprising the waxy tapioca starch in contact with the aqueous decolorizing liquid,
wherein the contacting with the base and/or surfactant is performed without isolating the starch from the starch milk.

10. The method according to any of claims 1-9, wherein the method comprises providing a starch milk having the waxy tapioca starch (i.e., as small particles) suspended in an aqueous medium; isolating the starch from the starch milk to provide a moist solid, and, without substantially drying the moist solid, contacting it with the aqueous decolorizing liquid.

11. The method according to any of claims 1-10, wherein the method provides a dry waxy tapioca starch having a low color, i.e., having a Yellowness Index of no more than 8, and/or improves the color of the starch as compared to an unwashed sample of the same starch by at least 3 paste color units.

12. The method according to any of claims 1-11, wherein the waxy tapioca starch is prepared by a method including forming a tapioca pulp from a cassava tuber having at least 10% of the skin remaining thereon.

13. A low-color waxy tapioca starch, having a Yellowness Index, as determined by ASTM E313, of no more than 8 in dry form, and/or a paste color, as determined by the method disclosed in the description, of no more than 5 made by the method of any of claims 1-12.

14. A food product including a waxy tapioca starch according to claim 13.

## Patentansprüche

1. Verfahren zur Verhinderung der Farbbildung in einer wachsartigen Tapiokastärke, wobei das Verfahren Folgendes umfasst:
Bereitstellen einer wachsartigen Tapiokastärke, und
Inkontaktbringen der wachsartigen Tapiokastärke mit einer wässrigen Entfärbungsflüssigkeit, wobei die wässrige Entfärbungsflüssigkeit aus der Gruppe ausgewählt ist, die aus
einer wässrigen alkalischen Flüssigkeit und
einer wässrigen Tensidflüssigkeit besteht; und
im Wesentlichen Entfernen der wässrigen Entfärbungsflüssigkeit von der wachsartigen Tapiokastärke,
wobei die wässrige Entfärbungsflüssigkeit im Wesentlichen keine bleichenden oder oxidierenden Verbindungen enthält; das Inkontaktbringen derart durchgeführt wird, dass die Stärkemoleküle der Stärke nicht modifiziert werden; und das In-Kontakt-Bringen mit der wässrigen Entfärbungsflüssigkeit unter Bedingungen durchgeführt wird, bei denen die wachsartige Tapiokastärke nicht gelatiniert oder pastös wird.

2. Verfahren nach Anspruch 1, wobei die wässrige Entfärbungsflüssigkeit eine alkalische Zusammensetzung ist.

3. Verfahren nach Anspruch 2, wobei die wässrige alkalische Flüssigkeit einen pH-Wert im Bereich von 7,5 bis 12, beispielsweise im Bereich von 8 bis 9,9, besitzt.

4. Verfahren nach einem der Ansprüche 2 bis 4, wobei die wässrige alkalische Flüssigkeit eine oder mehrere von einer Carbonatbase, einer Bicarbonatbase und einer Hydroxidbase einschließt.

5. Verfahren nach einem der Ansprüche 1 bis 4, wobei die wässrige Entfärbungsflüssigkeit eine wässrige Tensidflüssigkeit ist, die ein Tensid, wie z. B. ein anionisches Tensid oder ein nichtionisches Tensid, einschließt.

6. Verfahren nach Anspruch 5, wobei das Tensid der wässrigen Entfärbungsflüssigkeit ein Hydrophil-Lipophil-Gleichgewichts (HLB) von mindestens 11, beispielsweise mindestens 13, aufweist.

7. Verfahren nach einem der Ansprüche 1 bis 6, wobei die wässrige Entfärbungsflüssigkeit in einer Menge von mindestens 2 1 pro kg trockener wachsartiger Tapiokastärke verwendet wird.

8. Verfahren nach einem der Ansprüche 1 bis 7, wobei das Wasser der wässrigen Entfärbungszusammensetzung entionisiertes Wasser ist, das einen spezifischen Widerstand von mindestens 1MΩ·cm aufweist.

9. Verfahren nach einem der Ansprüche 1 bis 8, wobei das Verfahren Folgendes umfasst:
a) Bereitstellen einer Stärkemilch, umfassend die wachsartige Tapiokastärke, die in einem wässrigen Medium suspendiert ist; und Zugeben von Base und/oder Tensid zu dem wässrigen Medium, um die wachsartige Tapiokastärke in Kontakt mit der wässrigen Entfärbungsflüssigkeit zu bringen; oder
b) Waschen von Tapiokapülpe mit der wässrigen Entfärbungsflüssigkeit, um daraus Stärke zu extrahieren, wodurch eine Stärkemilch gebildet wird, welche die wachsartige Tapiokastärke in Kontakt mit der wässrigen Entfärbungsflüssigkeit umfasst,
wobei das Inkontaktbringen mit der Base und/oder dem Tensid ohne Isolierung der Stärke aus der Stärkemilch durchgeführt wird.

10. Verfahren nach einem der Ansprüche 1 bis 9, wobei das Verfahren Folgendes umfasst: Bereitstellen einer Stärkemilch, die die in einem wässrigen Medium suspendierte wachsartige Tapiokastärke (d. h., als kleine Partikel) enthält; Isolieren der Stärke aus der Stärkemilch, um einen feuchten Feststoff bereitzustellen, und Inkontaktbringen des feuchten Feststoffs mit der wässrigen Entfärbungsflüssigkeit, ohne ihn im Wesentlichen zu trocknen.

11. Verfahren nach einem der Ansprüche 1 bis 10, wobei das Verfahren eine trockene wachsartige Tapiokastärke bereitstellt, die eine geringe Färbung aufweist, d. h., einen Gelbwert von nicht mehr als 8 aufweist, und/oder die Farbe der Stärke im Vergleich zu einer ungewaschenen Probe derselben Stärke um mindestens 3 Pastenfarbeinheiten verbessert.

12. Verfahren nach einem der Ansprüche 1 bis 11, wobei die wachsartige Tapiokastärke durch ein Verfahren hergestellt wird, welches das Bilden einer Tapiokapülpe aus einer Maniokknolle einschließt, die mindestens 10 % der darauf verbleibenden Schale aufweist.

13. Wachsartige Tapiokastärke mit geringer Färbung, die einen Gelbwert, bestimmt nach ASTM E313, von nicht mehr als 8 in trockener Form und/oder eine Pastenfarbe, bestimmt nach dem in der Beschreibung angegebenen Verfahren, von nicht mehr als 5 aufweist, hergestellt anhand des Verfahrens nach einem der Ansprüche 1 bis 12.

14. Lebensmittelprodukt, einschließend eine wachsartige Tapiokastärke nach Anspruch 13.

## Revendications

1. Procédé permettant d'empêcher la formation d'une couleur dans un amidon de tapioca cireux, le procédé comprenant
la fourniture d'un amidon de tapioca cireux et
la mise en contact de l'amidon de tapioca cireux avec un liquide de décoloration aqueux, le liquide de décoloration aqueux étant sélectionné parmi le groupe constitué par
un liquide alcalin aqueux et
un liquide tensioactif aqueux, et
l'élimination substantielle du liquide de décoloration aqueux de l'amidon de tapioca cireux,
dans lequel le liquide de décoloration aqueux ne contient sensiblement pas de composés de blanchiment ou oxydants, la mise en contact est réalisée de sorte que les molécules d'amidon de l'amidon ne sont pas modifiées, et la mise en contact avec le liquide de décoloration aqueux est réalisée dans des conditions dans lesquelles l'amidon de tapioca cireux ne se gélatinise pas ou ne s'empâte pas.

2. Procédé selon la revendication 1, dans lequel le liquide de décoloration aqueux est une composition alcaline.

3. Procédé selon la revendication 2, dans lequel le liquide alcalin aqueux a un pH compris dans la plage de 7,5 à 12, par exemple compris dans la plage de 8 à 9,9.

4. Procédé selon l'une quelconque des revendications 2 à 4, dans lequel le liquide alcalin aqueux inclut une ou plusieurs des suivantes : une base carbonate, une base bicarbonate et une base hydroxyde.

5. Procédé selon l'une quelconque des revendications 1 à 4, dans lequel le liquide de décoloration aqueux est un liquide tensioactif aqueux qui inclut un tensioactif, tel qu'un tensioactif anionique ou un tensioactif non ionique.

6. Procédé selon la revendication 5, dans lequel le tensioactif du liquide de décoloration aqueux a un indice d'équilibre hydrophile-lipophile (HLB) d'au moins 11, par exemple d'au moins 13.

7. Procédé selon l'une quelconque des revendications 1 à 6, dans lequel le liquide de décoloration aqueux est utilisé à raison d'au moins 2 litres par kg d'amidon de tapioca cireux sec.

8. Procédé selon l'une quelconque des revendications 1 à 7, dans lequel l'eau de la composition de décoloration aqueuse est de l'eau désionisée ayant une résistivité d'au moins 1 MΩ·cm.

9. Procédé selon l'une quelconque des revendications 1 à 8, dans lequel le procédé comprend :
a) la fourniture d'un lait d'amidon comprenant l'amidon de tapioca cireux en suspension dans un milieu aqueux, et l'ajout d'une base et/ou d'un tensioactif au milieu aqueux pour amener l'amidon de tapioca cireux en contact avec le liquide de décoloration aqueux, ou
b) le lavage de la pulpe de tapioca avec le liquide de décoloration aqueux pour extraire l'amidon de celle-ci, formant ainsi un lait d'amidon comprenant l'amidon de tapioca cireux en contact avec le liquide de décoloration aqueux,
dans lequel la mise en contact avec la base et/ou le tensioactif est réalisée sans isoler l'amidon du lait d'amidon.

10. Procédé selon l'une quelconque des revendications 1 à 9, dans lequel le procédé comprend la fourniture d'un lait d'amidon contenant l'amidon de tapioca cireux (c'est à dire sous forme de petites particules) en suspension dans un milieu aqueux, l'isolation de l'amidon à partir du lait d'amidon pour fournir un solide mouillé, et, sensiblement sans sécher le solide mouillé, la mise en contact de celui-ci avec le liquide de décoloration aqueux.

11. Procédé selon l'une quelconque des revendications 1 à 10, dans lequel le procédé fournit un amidon de tapioca cireux sec qui est peu coloré, c'est-à-dire ayant un indice de couleur jaune qui n'est pas supérieur à 8, et/ou améliore la couleur de l'amidon par comparaison avec un échantillon non lavé du même amidon d'au moins trois unités de couleur de pâte.

12. Procédé selon l'une quelconque des revendications 1 à 11, dans lequel l'amidon de tapioca cireux est préparé par un procédé incluant la formation d'une pulpe de tapioca à partir d'un tubercule de manioc dont au moins 10 % de la peau reste sur ceux-ci.

13. Amidon de tapioca cireux peu coloré, ayant un indice de couleur jaune, déterminé selon la norme ASTM E313, qui n'est pas supérieur à 8 sous une forme sèche, et/ou une couleur de pâte, telle que déterminée selon le procédé décrit dans la description, qui n'est pas supérieure à 5, préparé par le procédé selon l'une quelconque des revendications précédentes 1 à 12.

14. Produit alimentaire incluant un amidon de tapioca cireux selon la revendication 13.
